(19) Europäisches Patentamt

European Patent Office

Office européen des brevets

(11) **EP 1 370 757 B1**

(12) **EUROPÄISCHE PATENTSCHRIFT**

(45) Veröffentlichungstag und Bekanntmachung des Hinweises auf die Patenterteilung:
**25.10.2006 Patentblatt 2006/43**

(21) Anmeldenummer: **02712739.8**

(22) Anmeldetag: **01.02.2002**

(51) Int Cl.:
*F02D 13/02* (2006.01)     *F02D 41/26* (2006.01)
*F01L 9/04* (2006.01)

(86) Internationale Anmeldenummer:
**PCT/DE2002/000374**

(87) Internationale Veröffentlichungsnummer:
**WO 2002/070882 (12.09.2002 Gazette 2002/37)**

(54) **VERFAHREN UND VORRICHTUNG ZUM STEUERN EINES BETRIEBS EINER BRENNKRAFTMASCHINE**

METHOD AND DEVICE FOR CONTROLLING THE OPERATION OF AN INTERNAL COMBUSTION ENGINE

PROCEDE ET DISPOSITIF DE COMMANDE DU FONCTIONNEMENT D'UN MOTEUR A COMBUSTION INTERNE

(84) Benannte Vertragsstaaten:
**DE FR IT**

(30) Priorität: **10.02.2001   DE 10106169**

(43) Veröffentlichungstag der Anmeldung:
**17.12.2003   Patentblatt 2003/51**

(73) Patentinhaber: **ROBERT BOSCH GMBH**
**70442 Stuttgart (DE)**

(72) Erfinder:
• WALTER, Rainer
**74385 Pleidelsheim (DE)**
• ROSENAU, Bernd
**71732 Tamm (DE)**
• DIEHL, Udo
**70195 Stuttgart (DE)**
• GAESSLER, Hermann
**71665 Vahingen (DE)**
• MISCHKER, Karsten
**71229 Leonberg (DE)**
• SCHIEMANN, Juergen
**71706 Markgroeningen (DE)**
• GROSSE, Christian
**70806 Kornwestheim (DE)**
• MALLEBREIN, Georg
**70825 Korntal-Muenchingen (DE)**
• BEUCHE, Volker
**70372 Stuttgart (DE)**
• REIMER, Stefan
**71706 Markgroeningen (DE)**

(56) Entgegenhaltungen:
DE-A- 4 408 488          DE-A- 19 756 342
DE-C- 19 622 399

EP 1 370 757 B1

**Beschreibung**

Die vorliegende Erfindung betrifft eine Steueranordnung für eine Brennkraftmaschine mit mindestens einem Zylinder mit mindestens einem Einlass- und mindestens einem Auslassventil mit zylinderindividuell steuerbarem voll-variablem Ventiltrieb, sowie ein Verfahren zum Steuern des Betriebs einer Brennkraftmaschine mit mindestens einem Zylinder mit mindestens einem Einlass- und mindestens einem Auslassventil mit zylinderindividuell steuerbarem voll-variablem Ventiltrieb.

Herkömmliche Brennkraftmaschinen weisen eine oder mehrere Nockenwellen zum Steuern der Motorventile mit einer vorgegebenen Ventilerhebungskurve auf. Durch die Auslegung der Nockenwelle wird die Ventilerhebungskurve der Motorventile festgelegt. Eine festgelegte Ventilerhebungskurve für die Einlass- und Auslassventile der Brennkraftmaschine lässt jedoch keinen optimalen Betrieb der Brennkraftmaschine in jedem Betriebszustand zu, da im allgemeinen unterschiedliche Brennkraftmaschinenbetriebszustände unterschiedliche Ventilerhebungskurven erfordern.

Aufgrund der festen Ventilerhebungskurve ist eine Steuerung von Gaswechseln der Zylinder der Brennkraftmaschine nur begrenzt möglich und kann nicht für alle Betriebszustände optimiert werden. Unter Gaswechsel versteht man das Ausschieben von Abgas aus einem Brennraum und die Füllung des Brennraumes eines Zylinders der Brennkraftmaschine mit Frischluft, eventuell zugesetztem Kraftstoff und je nach Betriebszustand und der Art der Brennkraftmaschine, einem zurückgeführten Restgas einer vorhergehenden Verbrennung.

Um den Gaswechsel bei den Zylindern einer Brennkraftmaschine variabel zu steuern sind verschiedene voll-variable Ventiltriebe für die Einlass- und Auslassventile vorgeschlagen worden. Bei dem voll-variablen Ventiltrieb sind die Motorventilvorgänge flexibel. Dies bedeutet, dass die Mengen der in den Zylinder gefüllten Frischluft und des Restgases durch Variieren des Zeitpunktes des Öffnens und/oder Schliessens und/oder der Öffnungs- und/oder Schliessgeschwindigkeit und/oder des Hubes der Einlass- und Auslassventile gesteuert werden. Als voll-variable Ventiltriebe sind beispielsweise eine elektromagnetische Ventilsteuerung EMVS und eine elektrohydraulische Ventilsteuerung EHVS bekannt. Ferner sind mechanische voll-variable Ventiltriebe wie beispielsweise VANOS in Verbindung mit einer Hubsteuerung bekannt.

Bei EMVS und EHVS ist es zum Betrieb der Brennkraftmaschine nicht erforderlich, eine Nockenwelle vorzusehen. Somit ist eine Verstelldynamik, d. h., ein Ausmass der Veränderungsmöglichkeiten der Einlassventil- und Auslassventilöffnungs- und schliesszeiten, des Öffnungshubes und der Öffnungs- und Schliessgeschwindigkeit lediglich durch die mechanische Ausgestaltung der Einlass und Auslassventile sowie der entsprechenden Ventilsteller beschränkt. Dies bedeutet, dass für jedes Arbeitsspiel eines aktuellen Zylinders die Gasfüllung des aktuellen Zylinders unabhängig von einer Gasfüllung eines Zylinders, der in der Zündreihenfolge vor dem Zylinder ist, eingestellt werden kann und unabhängig von einer Gasfüllung des aktuellen Zylinders bei einem vorhergehenden Arbeitsspiel eingestellt werden kann.

Aus der DE 197 56 342 A 1 ist beispielsweise ein Verfahren zur Steuerung einer Brennkraftmaschine bekannt, bei dem ein Motorsteuergerät Aktoren zur elektromagnetischen Ventilsteuerung über einen Datenbus steuert. Die Aktoren werden hierbei in Abhängigkeit von Sensordaten und/oder von Kennfeldern angesteuert.

Üblicher Weise weist eine solche Steueranordnung für eine Brennkraftmaschine mit Voll-variablem Ventiltrieb eine Motorsteuereinrichtung und eine Ventilsteuereinrichtung auf, die mit einem Software-Bus-System, wie beispielsweise einem CAN-Bus verbunden sind. In der Motorsteuereinrichtung werden beispielsweise auf der Grundlage von Ausgangssignalen eines Kurbelwinkelsensors, einer Lambdasonde, eines Heiss-Film-Luftmassensensors und eines Saugrohrdrucksensors Ansteuersignale für eine Drosselklappe, ein Einspritzventil, eine Zündkerze sowie für die Ventilsteuereinrichtung ermittelt. Die Ansteuersignale für die Ventilsteuereinrichtung werden über das Software-Bus-System zu der Ventilsteuereinrichtung übertragen. Die Ventilsteuereinrichtung übersetzt die Ansteuersignale in Öffnungs- und Schliesszeitpunkte der Einlass- und Auslassventile, einen Öffnungshub der Einlass- und Auslassventile und eine Öffnungs- bzw. Schliessgeschwindigkeit der Ein- und Auslassventile. Eine bei diesen Steueranordnungen über das Software-Bus-System übertragene Datenmenge ist bei einem Betriebszustand mit Lastwechselvorgängen bei hohen Drehzahlen sehr hoch. Dementsprechend ist es erforderlich, das Software-Bus-System ausreichend gross und für normale Betriebszustände überdimensioniert auszulegen.

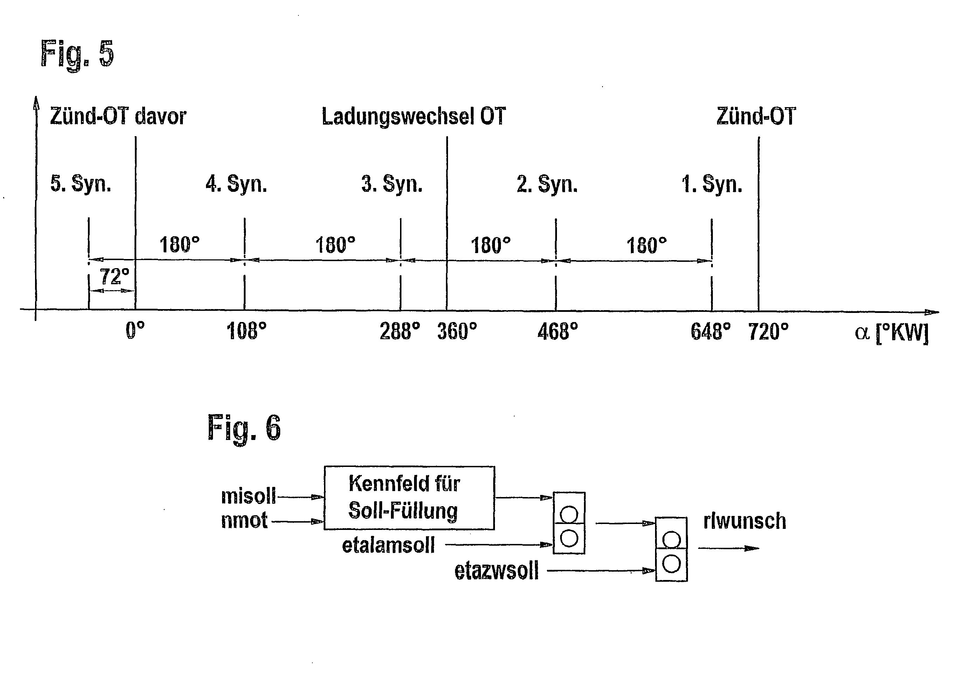

Figur 6 zeigt ein Modell, das eine Berechnung einer Wunschfüllung eines Zylinders mit Frischluft zur Realisierung eines Soll-Drehmoments zeigt, wie es beispielsweise in der Bosch-Motorsteuerung ME7 verwendet wird. Mittels eines Sollmoments misoll und einer Drehzahl nmot der Brennkraftmaschine als Eingangsgrössen wird aus einem Kennfeld für eine Soll-Füllung des Zylinders unter Berücksichtigung eines Soll-Lambdawirkungsgrades etalamsoll und eines gewünschten Zündwinkelwirkungsgrades etazwsoll eine Frischluft-Wunschfüllung rlwunsch des Zylinders zur Realisierung eines induzierten Soll-Drehmoments berechnet. Die Wunschfüllung rlwunsch ist auf 100% bei einer Füllung des Hubvolumens des Zylinders mit Frischluft bei 1.013 mb bei 0°C normiert. Der Eingangswert misoll ist der Sollwert des induzierten Moments, der auf 100% bei einer Füllung mit 100% Frischluft, einem Lambda $\lambda = 1{,}0$ und optimalem Zündwinkel normiert ist. Der Eingangswert nmot gibt eine Drehzahl der Brennkraftmaschine an.

Das in Figur 6 dargestellte Berechnungsmodell zur Berechnung der Wunschfüllung des Zylinders mit Frischluft zur Realisierung eines vorgegebenen Soll-Drehmoments wird heute bei Brennkraftmaschinen mit einer Drosselklappe verwendet. Für Brennkraftmaschinen mit voll-variablem Ventiltrieb ist dieses Berechnungsmodell ungenügend.

Es ist die Aufgabe der vorliegenden Erfindung, eine Steueranordnung für eine Brennkraftmaschine mit voll-variablem Ventiltrieb mit einem einfachen Aufbau und ein einfaches Verfahren zum Steuern eines Betriebs einer Brennkraftmaschine mit einem voll-variablem Ventiltrieb anzugeben.

Diese Aufgabe wird erfindungsgemäss durch eine Steueranordnung mit den in Patentanspruch 1 aufgeführten Merkmalen sowie mit einem Verfahren mit den in Patentanspruch 10 aufgeführten Merkmalen gelöst.

Vorteilhafte Ausgestaltungen der vorliegenden Erfindung ergeben sich aus den Unteransprüchen.

Im folgenden werden Ausführungsbeispiele der vorliegenden Erfindung unter Bezugnahme auf die begleitenden Figuren beschrieben.

Figur 1 zeigt ein Ausführungsbeispiel der Steueranordnung der Erfindung mit einer schematischen Darstellung eines Zylinders einer Brennkraftmaschine mit voll-variablem Ventiltrieb;

Figur 2 zeigt einen Ventilsteller;

Figur 3 zeigtverschiedene Ventilerhebungskurven eines Einlassventils und eines Auslassventils sowie einen Verlauf von Ansteuersignalen eines Einspritzventils und einer Zündspule über dem Kurbelwinkel;

Figur 4 zeigt ein Ausführungsbeispiel der Motorsteuereinrichtung von Figur 1;

Figur 5 zeigtein Diagramm zur Erläuterung einer Datenübertragung zwischen der Motorsteuereinrichtung und der Ventilsteuereinrichtung von Figur 1; und

Figuren 6 zeigt eine bekannte Umrechnung von induzierten Soll-Drehmomenten in Frischluft-Wunschfüllungen unter Berücksichtigung von Lambdawirkungsgraden und Zündwinkelwirkungsgraden.

Die Beschreibung des folgenden Ausführungsbeispiels betrifft einen 4-Zylinder Ottomotor mit Saugrohreinspritzung und voll-variablem Ventiltrieb. Alle Angaben betreffend Ventilzeitgaben beziehen sich auf den 4-Zylinder Ottomotor des Ausführungsbeispiels. Bei Anwendung der vorliegenden Erfindung auf eine Brennkraftmaschine mit n Zylindern, verschieben sich die angegebenen Zeitgaben in entsprechender Weise.

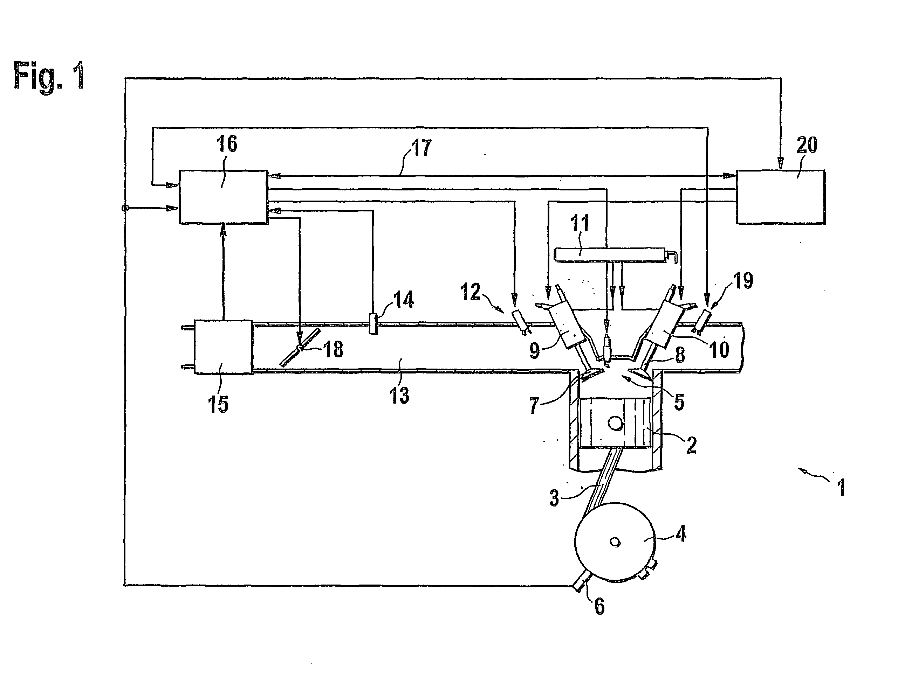

Figur 1 zeigt ein Ausführungsbeispiel der Steueranordnung der vorliegenden Erfindung mit einer schematischen Darstellung eines Zylinders einer Brennkraftmaschine 1 mit einem voll-variablen Ventiltrieb. In Figur 1 ist nur ein Zylinder der Brennkraftmaschine 1 dargestellt. Die Bezugsziffer 2 bezeichnet einen Kolben eines Zylinders, der über eine Pleuelstange 3 mit einer schematisch dargestellten Kurbelwelle 4 verbunden ist. Der Kolben 2 begrenzt einen Brennraum des Zylinders. An der Kurbelwelle 4 ist ein Kurbelwinkelsensor6 angeordnet, dereinen Kurbelwinkel derKurbelwelle4 erfasst und ein entsprechendes Ausgangssignal ausgibt.

In dem Brennraum des Zylinders ist eine Zündkerze 5 angeordnet. Der Brennraum des Zylinders kann über ein Einlassventil 7 mit Frischluft befüllt werden und über ein Auslassventil 8 entleert werden. Das Einlassventil 7 ist dergestalt angeordnet, dass es eine Einlassöffnung des Zylinders - je nach Stellung des Einlassventils 7 - verschliesst oder öffnet. Das Auslassventil 8 ist dergestalt angeordnet, dass es eine Auslassöffnung des Zylinders - je nach Stellung des Auslassventils 8 - verschliesst oder öffnet. Ein Luftfluss bei einem Betrieb der Brennkraftmaschine 1 fliest von einem Saugrohr 13 durch die Einlassöffnung in den Brennraum des Zylinders und durch die Auslassöffnung aus dem Brennraum des Zylinders hinaus.

Das Einlassventil 7 und das Auslassventil 8 werden mittels eines Ventilstellers 9 für das Einlassventil 7 und eines Ventilstellers 10 für das Auslassventil 8 geöffnet und geschlossen.

Die Bezugsziffer 11 bezeichnet eine Hydraulikdruckkammer, die beispielsweise als Common Rail ausgestaltet ist, die mit den Ventilstellern 9 und 10 über Hydraulikverbindungen verbunden ist. Ein in der Hydraulikkammer 11 unter Druck gesetztes Hydraulikmedium wird durch die Hydraulikverbindungen an die Ventilsteller 9 und 10 angelegt.

Die Bezugsziffer 12 bezeichnet ein Einspritzventil zum Einspritzen von Kraftstoff in das Saugrohr 13 der Brennkraftmaschine 1. Die Bezugsziffer 14 bezeichnet einen Saugrohrdrucksensor und die Bezugsziffer 15 bezeichnet einen Heiss-Film-Luftmassensensor. Der Heiss-Film-Luftmassensensor 15 ist in dem Saugrohr 13 der Brennkraftmaschine 1 in Luftflussrichtung vor einer Drosselklappe 18 angeordnet. Die Drosselklappe 18 ist in dem Saugrohr 13 der Brennkraftmaschine 1 angeordnet um einen Luftfluss in das Saugrohr 13 zu steuern. Die Luftflussrichtung in dem Saugrohr 13 der Brennkraftmaschine 1 geht von dem Heiss-Film-Luftmassensensor an der Drosselklappe 18 vorbei, an dem Saugrohrdrucksensor 14, der in einer Wand des Saugrohrs 13 angeordnet ist, vorbei, und an dem Einspritzventil 12 vorbei, das Kraftstoff in das Saugrohr 13 einspritzt. Die mit Kraftstoff versetzte Frischluft wird dann durch das Einlassventil 7 in den Brennraum der Brennkraftmaschine 1 eingesaugt, verdichtet, mittels der Zündkerze 5 gezündet und nach einer Aufwärtsbewegung des Kolbens 2 durch das Auslassventil 8, das zu diesem Zweck geöffnet wird, ausgelassen. Der Auslassluftstrom oderAuspuffiluftstrom wird dann an einer Lambdasonde 19 vorbei in einen Auspuff (nicht dargestellt) abgeführt.

Wenn durch das Einspritzventil 12 Kraftstoff in das Saugrohr 13 eingespritzt wird, wird der überwiegende Teil des eingespritzten Kraftstoffs mit der Frischluft zusammen bei geöffnetem Einlassventil 7 in den Brennraum des Zylinders gesaugt. Ein Teil des Kraftstoffs benetzt jedoch die Wände des Saugrohrs 13 und bildet einen Wandfilm. Ferner legt sich bei einer Füllungsreduktion durch spätes Schliessen des Einlassventils 7 der überschüssige Kraftstoff, der aufgrund der Füllungsreduktion nicht in den Brennraum eingesaugt wurde, an den Wänden des Saugrohrs 13 an und bildet einen Wandfilm. Beide Wandfilmarten werden im folgenden mit Wandfilm bezeichnet.

Die Bezugsziffer 16 bezeichnet eine Motorsteuereinrichtung, die als Eingänge die Ausgangssignale des Kurbelwinkelsensors 6, der Lambdasonde 19, des Heiss-Film-Luftmassensensors 15 und des Saugrohrdrucksensors 14 aufweist. Die Motorsteuereinrichtung 16 ist über einen Bus 17, beispielsweise einen CAN-Bus, mit einer Ventilsteuereinrichtung 20 verbunden. Ferner ist die Motorsteuereinrichtung 16 mit der Drosselklappe 18 verbunden, und steuert die Betätigung der Drosselklappe 18.

Die Motorsteuereinrichtung 16 ermittelt aus den oben aufgezählten Eingangsgrössen Ansteuersignalefürdie Drosselklappe 18, das Einspritzventil 12, die Zündkerze 5 sowie für die Ventilsteuereinrichtung 20. Die Ansteuersignale für die Ventilsteuereinrichtung 20 werden zu der Ventilsteuereinrichtung 20 über den Bus 17 übertragen und betreffen eineÖffnungs-und Schliesszeit, eine Öffnungs-und Schliessgeschwindigkeit und einen Hub der Einlass- und Auslassventile 7 und 8.

Die Ventilsteuereinrichtung 20 weist als Eingangsgrössen die Ausgangssignale des Kurbelwinkelsensors 6 sowie die Ansteuersignale der Motorsteuereinrichtung 16 auf, die über den Bus 17 übertragen werden. Als Ausgangssignale gibt die Ventilsteuereinrichtung 20 Ansteuersignale für den Ventilsteller 9 des Einlassventils 7 und für den Ventilsteller 10 des Auslassventils 8 dergestalt aus, dass das Einlassventil 7 und das Auslassventil 8 entsprechend den von der Motorsteuereinrichtung 16 an die Ventilsteuereinrichtung 20 übertragenen Ansteuersignalen geöffnet und geschlossen werden.

Obwohl in Figur 1 eine Drosselklappe 18 in dem Saugrohr 13 vorgesehen ist, ist die vorliegende Erfindung nicht auf eine Brennkraftmaschine 1 mit einer Drosselklappe 18 beschränkt. Ferner ist die vorliegende Erfindung nicht auf eine nichtaufgeladene Brennkraftmaschine 1 mit Saugrohreinspritzung, wie in Figur 1 gezeigt ist, beschränkt, sondern ist auch uneingeschränkt auf eine Mehrzylinderbrennkraftmaschine 1 mit Direkteinspritzung oder Turboaufladung anwendbar.

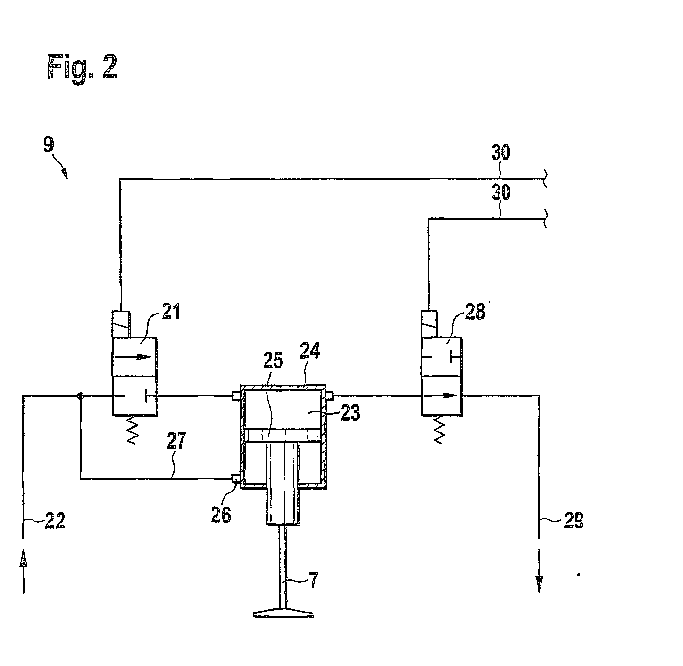

Im folgenden wird nun mit Verweis auf Figur 2 ein Aufbau und eine Funktionsweise der Ventilsteller 9 und 10 anhand des Ventilstellers 9 für das Einlassventil 7 beschrieben. Obwohl in Figur 2 als Beispiel einer voll-variablen Ventilsteuerung ein elektrohydraulischervoll-variabler Ventiltrieb dargestellt ist, ist die vorliegende Erfindung nicht darauf beschränkt, sondern ist in gleicher Weise auf alle voll-variablen Ventiltriebe, wie beispielsweise elektromagnetische Ventiltriebe anwendbar. Ferner ist die Erfindung auf elektromagnetische Ventilsteuerungen anwendbar, elektrohydraulische Ventilsteuerungen und mechanische Steuerungen wie beispielsweise Vanos in Verbindung mit VVT.

Die Bezugziffer 21 bezeichnet ein erstes Magnetventil. Das erste Magnetventil 21 ist in einer Hydraulikverbindung 22 zwischen der Hydraulikdruckkammer 11 und einer ersten Kammer 23 in einer Betätigungseinrichtung 24 angeordnet. In der Betätigungseinrichtung 24 ist ein Ventilfuss 25 des Einlassventils 7 angeordnet. Der Ventilfuss 25 ist steif mit dem Einlassventil 7 verbunden. Der Ventilfuss 25 ist in der Betätigungseinrichtung 24 versetzbar angeordnet. Der Ventilfuss 25 trennt die erste Kammer 23 von einer zweiten Kammer 26 in der Betätigungseinrichtung 24.

Zwischen der zweiten Kammer 26 in der Betätigungseinrichtung 24 und der Hydraulikdruckkammer 11 ist eine zweite Hydraulikverbindung 27 vorgesehen. Die erste Kammer 23 ist ferner über ein zweites Magnetventil 28 mit der Hydraulikdruckkammer 11 durch eine dritte Hydraulikverbindung 29 verbunden.

Das erste Magnetventil 21 und das zweite Magnetventil 28 sind über Leitungen 30 mit der Ventilsteuereinrichtung 20 verbunden. Die Ventilsteuereinrichtung 20 betätigt das erste Magnetventil 21 und das zweite Magnetventil 28 durch entsprechende Ansteuersignale. Vorzugsweise ist die Ventilsteuereinrichtung ausgestaltet, alle Ventilsteller der Einlass- und Auslassventile 7 und 8 der Brennkraftmaschine 1 zu betätigen.

Der Betrieb des in Figur 2 dargestellten Ventilstellers 9 ist wie folgt. Wenn das erste Magnetventil 21 geöffnet ist, strömt von der Hydraulikdruckkammer 11 ein unter Druck stehendes Hydraulikmedium in die erste Kammer 23. Das Hydraulikmedium füllt die erste Kammer 23 und versetzt den Ventilfuss 25, der die erste Kammer 23 von der zweiten Kammer 26 trennt. Dadurch wird das Einlassventil 7 in Figur 2 nach unten versetzt. Das Einlassventil 7 ist dergestalt angeordnet, dass das Einlassventil 7 in einem nicht dargestellten Ventilsitz in einem Zylinderkopf eines Zylinders der Brennkraftmaschine 1 sitzt, wenn der Ventilfuss in Figur 2 ganz oben ist, d.h. kein Hydraulikmedium in der ersten Kammer 23 ist, also die erste Kammer 23 einen minimalen Raum aufweist und die zweite Kammer 26 einen maximalen Raum aufweist. In dieser Position verschliesst das Einlassventil 7 die Einlassöffnung des Brennraums des Zylinders. Wenn die erste Kammer 23 mit dem Hydraulikmedium gefüllt wird, wird das Einlassventil 7 aus dem Ventilsitz heraus in den Brennraum des Zylinders versetzt, und die Einlassöffnung des Zylinders geöffnet. Wenn ein gewünschter Ventilhub erreicht ist, wird das erste Magnetventil 21 geschlossen.

Zum Schliessen des Einlassventils 7 wird das zweite Magnetventil 28 geöffnet, so dass das in der ersten Kammer 23 befindliche Hydraulikmedium durch das geöffnete zweite Magnetventil 28 zu einem Sammler (nicht dargestellt) zurückfliessen kann. Das von der Hydraulikdruckkammer 11 unter Druck an die zweite Kammer 26 angelegte Hydraulikmedium strömt dann in die zweite Kammer 26 und versetzt damit den Ventilfuss 25 in Figur 2 nach oben. Damit wird das Einlassventil 7 in den Ventilsitz zurückversetzt und die Einlassöffnung des Brennraums verschlossen. Eine Öffnungs-und Schliessgeschwindigkeit des Einlassventils 7 wird durch den Druck gesteuert, mit dem die Hydraulikdruckkammer 11 das Hydraulikmedium dem Ventilsteller 9 zuführt.

Ventilsteller dieser Art ermöglichen für jedes Auslass- und jedes Einlassventil 8 und 7 der Brennkraftmaschine 1 eine individuelle Ventilansteuerung.

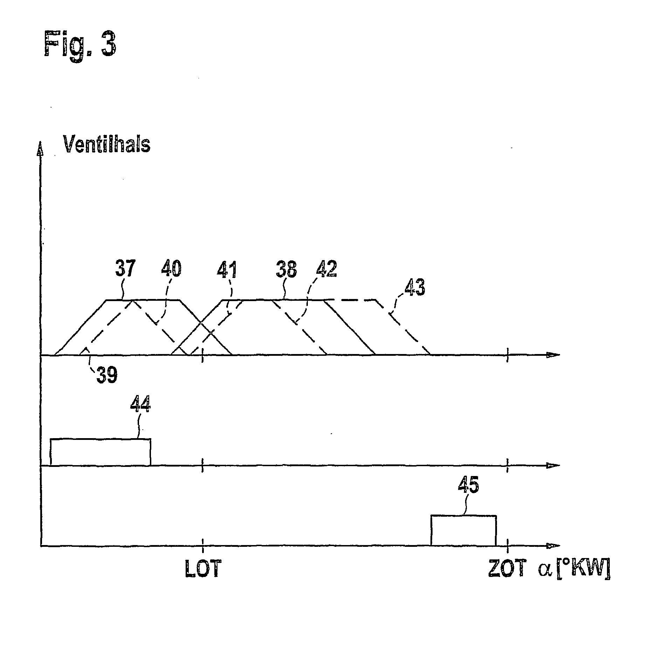

Figur 3 zeigt ein Diagramm das Ventilerhebungskurven eines Einlassventils 7 und eines Auslassventils 8 eines Zylinders über dem Kurbelwinkel $\alpha$ darstellt, wie sie mittels der Motorsteuereinrichtung 16 durch Ansteuerung der Ventilsteuereinrichtung 20, und mittels der Ventilsteuereinrichtung 20 durch Ansteuerung der ersten und zweiten Magnetventile 21 und 28 der Ventilsteller 9 und 10 realisiert werden. Figur 3 zeigt ferner einen Verlauf eines Ansteuersignals ti des Einspritzventils 12 der mit der Bezugsziffer 44 bezeichnet ist und einen Verlauf eines Ansteuersignals zue einer Zündspule, die die erforderliche Zündspannung an die Zündkerze 5 anlegt, der mit der Bezugsziffer 45 bezeichnet ist.

Entlang den Abzissen des Diagramms von Figur 3 ist der Kurbelwinkel $\alpha$ der Brennkraftmaschine 1 in Kurbelwinkeleinheiten [°KW] angetragen. Entlang der Ordinate des Diagramm von Figur 3 ist der Ventilhub des Auslassventils 8 und des Einlassventils 7 eines Zylinders der Brennkraftmaschine 1 angetragen, sowie Amplituden des Ansteuersignals ti des Einspritzventils 12 und des Ansteuersignals zue der Zündspule der Brennkraftmaschine 1.

Die Bezugsziffer 37 bezeichnet einen durchgezogenen Graph der eine Ventilerhebungskurve des Auslassventils 8 des Zylinders darstellt. Die Bezugsziffer 38 bezeichnet einen durchgezogenen Graph der eine Ventilerhebungskurve des Einlassventils 7 des Zylinders der Brennkraftmaschine 1 darstellt. Die Bezugsziffer 39 bezeichnet eine gestrichelte Linie die eine Veränderung der Ventilerhebungskurve 37 des Auslassventils 8 darstellt. Im Vergleich zu der Ventilerhebungskurve 37 wurde bei dem Graph 39 der Öffnungswinkel des Auslassventils 8 nach hinten verschoben, wodurch das indizierte Drehmoment des vorhergehenden Arbeitsspiels dieses Zylinders verringert wird. Damit wird nachträglich eine Verringerung des indizierten Moments des Zylinders des vorhergehenden Arbeitsspiels möglich. Dies wird auch als Momentenreduktion bezeichnet.

Die Bezugsziffer 40 bezeichnet eine weitere Veränderungsmöglichkeit der Ventilerhebungskurve 37. Die gestrichelte Linie 40 stellt eine Ventilerhebungskurve dar, bei der im Vergleich zu der Ventilerhebungskurve 37 der Schliesswinkel des Auslassventils 8 nach vorne verschoben worden ist. Durch Verschiebung des Schliesswinkels des Auslassventils 8 ist eine Steuerung einer internen Restgasfüllung in dem Zylinder möglich. Die interne Restgasfüllung bezeichnet eine Menge eines Verbrennungsabgases einer vorhergehenden Verbrennung des vorhergehenden Arbeitsspiels dieses Zylinders, das nicht durch das Auslassventil 8 in den Auspuff ausgeschoben wurde, sondern für die kommende Verbrennung in dem augenblicklichen Arbeitsspiel in dem Brennraum des Zylinders verbleibt. Die Bezugsziffer 41 bezeichnet eine Veränderungsmöglichkeit bei der Ventilerhebungskurve 38 des Einlassventils 7. Die gestrichelte Linie 41 bezeichnet eine Veränderung der Ventilerhebungskurve 38 dergestalt, dass der Öffnungswinkel des Einlassventils 7 nach hinten verschoben worden ist. Durch die Verschiebung des Einlassventil-Öffnungswinkels des Einlassventils 7 nach hinten in Verbindung mit einer Verschiebung des Schliesswinkels des Auslassventils 8 ist es in stärkerem Masse als mit dem Verschieben des Schliesswinkels des Auslassventils 8 alleine möglich die interne Restgasfüllung des Zylinder zu steuern.

Die Graphen 42 und 43 zeigen weitere Veränderungsmöglichkeiten der Einlassventilerhebungskurve 38. Der gestrichelte Graph 42 stellt eine Verschiebung des Einlassventil-Schliesst-Zeitpunktes nach vorne dar und der gestrichelte Graph 43 stellt eine Verschiebung des Einlassventil-Schliesst-Zeitpunkes nach hinten dar. Durch die Veränderung des Einlassventil-Schliesst-Zeitpunktes kann die Gasfüllung des Zylinders gesteuert werden. Die in der Figur 3 dargestellten Ventilerhebungskurven werden von der Ventilsteuereinrichtung 20 durch ensprechende Ansteuerung der Ventilsteller 9 und 10 des entsprechenden Einlassventils 7 und des entsprechenden Auslassventils 8, wie anhand von Figur 2 erläutert worden ist, realisiert.

Die Bezugsziffer 44 bezeichnet einen Verlauf eines Ansteuersignals ti des Einspritzventils 12. Wie Figur 3 zu entnehmen ist, wird das Einspritzventil 12 vor der Öffnung des Einlassventils 7 so angesteuert, dass es vor dem Öffnen des Einlassventils 7 geöffnet und geschlossen wird. Die Zeitdauer zwischen dem Schliessen des Einspritzventils 12 und dem Öffnen des Einlassventils 7 wird als "max. erlaubte Flugzeit" oder kurz "Flugzeit" bezeichnet. Die Flugzeit bezeichnet die Zeitdauer, die erforderlich ist, dass der Kraftstoff nach dem Einspritzen mittels des Einspritzventils 12 durch einen Abschnitt des Saugrohrs 13 transportiert wird und durch das Einlassventil 7 in den Brennraum eingelassen wird.

Die Bezugsziffer 45 bezeichnet einen Verlauf eines Ansteuersignals zue einer Zündspule der Brennkraftmaschine 1. Wie Figur 3 zu entnehmen ist, ist die Amplitude des Ansteuersignals zue bis auf einen Winkelbereich vor dem oberen Totpunkt der Zündung ZOT null. In dem Winkelbereich vor ZOT wird die Zündspule mittels des Ansteuersignals zue dergestalt angesteuert, dass sie der Zündkerze 5 zum erforderlichen Zeitpunkt die Zündspannung zur Verfügung stellt.

Figur 3 stellt ferner den zeitlichen Kontext dar, in dem das Einlassventil 7 und das Auslassventil 8 zu öffnen und zu schliessen sind und das Einspritzventil 12 und die Zündspule zu betätigen sind. Wie Figur 3 zu entnehmen ist, beginnt der Einspritzvorgang des Zylinders mit dem Bestromen des Einspritzventils 12 mittels des Ansteuersignals ti. Die Länge des Ansteuersignals ti und damit die Länge der Öffnung des Einspritzventils bestimmt die in das Saugrohr 13 der Brennkraftmaschine 1 eingespritzte Kraftstoffmenge. Der Winkel bzw. der Zeitpunkt des Einspritzendes des Einspritzventils wird vorzugsweise festgehalten, so dass der Beginn der Einspritzung und damit der Beginn der Ansteuerung des Einspritzventils 12 die vorgelagerte Kraftstoffmenge bestimmt. Ein Winkelbetrag zwischen dem Schliessen des Einlassventils 12 und dem Schliessen des Einlassventils 7 muss ausreichend sein, dass unter Berücksichtigung der Flugzeit des eingespritzten Kraftstoffes nach dem Abschalten des Einspritzventils 12 der abgespritzte Kraftstoff noch in den Brennraum des Zylinders angesaugt werden kann.

Einen kurzen Winkelbetrag nach der Bestromung des Einspritzventils 12 mittels des Ansteuersignals ti wird das Auslassventil 8 der Brennkraftmaschine 1 geöffnet, wie mittels des Graph 37, der die Ventilerhebungskurve des Auslassventils 8 darstellt, gezeigt ist. Der Öffnungszeitpunkt bzw. der Öffnungswinkel des Auslassventils 8 hat in erster Linie Einfluss auf das induzierte Moment des vorhergehenden Arbeitsspiels. Durch Veränderung des Öffnungswinkels ist rückwirkend eine Verringerung eines Momentenbeitrags des Zylinders in dem vorhergehenden Arbeitsspiel zum Drehmoment der Brennkraftmaschine 1 möglich. Bei einem sehr frühen Öffnen des Auslassventils wird die Verbrennungsenergie nicht optimal in Bewegungsenergie umgesetzt. Wie anhand von Figur 2 erläutert worden ist, steuert die Ventilsteuereinrichtung 20 das Öffnen des Auslassventils durch Bestromen des ersten Magnetventils 21 des Ventilstellers 10 des Auslassventils 8. Der Hub des Auslassventils wird durch die Länge des Ansteuerimpulses des ersten Magnetventils 21 bestimmt.

Der Schliesszeitpunkt des Auslassventils 8 wird von der Ventilsteuereinrichtung 20 durch Ansteuerung des zweiten Magnetventils 28 des Ventilstellers 10 des Auslassventils 8 bewirkt. Der Schliesszeitpunkt des Auslassventils hat Einfluss auf eine interne Restgasfüllung des Zylinders, d. h., auf eine Menge des Restgases einer vorhergehenden Verbrennung in dem Zylinder, die nicht durch die Auslassöffnung in den Auspuff ausgeschoben wird sondern für die folgende Verbrennung in den Brennraum des Zylinders verbleibt.

Figur 3 ist ferner zu entnehmen, dass Zeitgaben für die Einspritzung, d. h. insbesondere der Einspritzbeginn und das Einspritzende in dem Arbeitsspiel, früh festzulegen sind. Dies gilt insbesondere bei hohen Drehzahlen, wo die Einspritzdauer einen Winkelbereich von mehreren hundert Grad über den Kurbelwinkel überstreichen kann. Ferner ist ersichtlich, dass, wenn das gewünschte Einspritzende nicht auf den spätestmöglichen Zeitpunkt festgelegt wird, d. h., kurz vor dem Schliessen des Einlassventils, unter Berücksichtigung der Flugzeit des Kraftstoffs durch Verlängerung der Einspritzung durch Schieben des Einspritzendes nach spät die eingespritzte Kraftstoffmenge erhöht werden kann. Einmal abgespritzter Kraftstoff kann jedoch nicht mehr rückgängig gemacht werden. Damit begrenzt ein früher Einspritzbeginn eine hohe Dynamik bei einer Kraftstoffmengenreduzierung zur Erzielung einer Drehmomentenverringerung.

Ferner ist der Öffnungszeitpunkt des Auslassventils 8 zu bestimmen. Mit dem Öffnungszeitpunkt des Auslassventils 8 ist der Hub des Auslassventils festzulegen. Der Hub wird dergestalt festgelegt, dass der Hub des Auslassventils 8 gross genug ist, um bei einer gegebenen Füllung und Drehzahl der Brennkraftmaschine 1 ein komplettes Ausströmen des Restgases der Verbrennung zu ermöglichen.

Durch Abstimmung des Schliesszeitpunktes des Auslassventils 8 und des Öffnungszeitpunktes des Einlassventils 7 wird eine interne Abgasrückführung realisiert.

Damit wird die interne Restgasfüllung des Zylinders bestimmt.

Eine weitere entscheidende Steuergrösse ist der Hub des Einlassventils 7. In Verbindung mit dem Schliesszeitpunkt des Einlassventils 7 bestimmt der Schliesszeitpunkt des Einlassventils 7 eine Einströmgeschwindigkeit des Gasgemisches aus dem Saugrohr 13 in den Brennraum des Zylinders.

Der Schliesszeitpunkt des Einlassventils 7 beeinflusst in Verbindung mit dem Hub des Einlassventils und dem Saugrohrdruck in dem Saugrohr 13 vor allem die Frischluftfüllung des Zylinders. Das letzte Ereignis in Figur 3 ist das Aufladen der Zündspule mittels des Ansteuersignals zue. Bei hohen Drehzahlen kann ein früherer Start der Aufladung nötig werden. Durch das Ende der Aufladung der Zündspule wird der Zündzeitpunkt festgelegt.

Das Ansteuersignal ti des Einspritzventils wird von der Motorsteuereinrichtung 16 direkt an das Einspritzventil 12 angelegt. Das Ansteuersignal zue der Zündspule wird von der Motorsteuereinrichtung 16 direkt an die Zündspule der Brennkraftmaschine 1 angelegt.

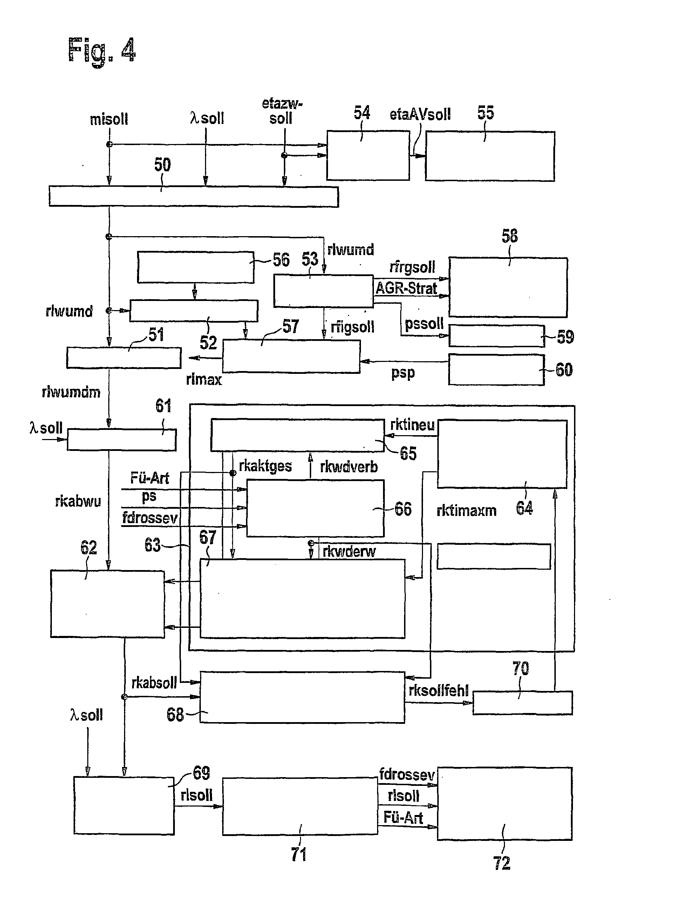

Nun wird mit Verweis auf Figur 4 ein Ausführungsbeispiel der Motorsteuereinrichtung 16, die Übertragung von Ansteuersignalen von der Motorsteuereinrichtung 16 über den Bus 17 zu der Ventilsteuereinrichtung 20 und die Ansteuerung der Ventilsteller 9 und 10 mittels der Ventilsteuereinrichtung 20 weiter beschrieben.

Die Bezugsziffer 50 in Figur 4 bezeichnet eine Wunschfüllungsbestimmungseinrichtung. Die Wunschfüllungsbestimmungseinrichtung 50 berechnet eine Wunschfüllung rlwumd für einen Zylinder der Brennkraftmaschine 1 aus einem Soll-Drehmoment misoll, einem Soll-Lambda der Verbrennung λsoll und einem Soll-Zündwinkelwirkungsgrad etazwsoll.

Die Wunschfüllung rlwumd bezeichnet eine Gasfüllung eines Zylinders in einem Arbeitsspiel. Die Gasfüllung besteht aus Frischluft und eventuell einem Restgas einer vorhergehenden Verbrennung. Das Soll-Drehmoment der Brennkraftmaschine 1 bezeichnet ein induziertes Drehmoment, das mit einer Leistungsvorgabeeinrichtung wie beispielsweise einem Gaspedal bei einem Kraftfahrzeug vorgegeben und an die Wunschfüllungsbestimmungseinrichtung 50 ausgegeben wird. Das Soll-Lambda der Verbrennung λsoll ist eine Grösse, die in der Motorsteuereinrichtung 16 hinsichtlich eines mageren, eines fetten oder eines stöchiometrischen Betriebszustandes der Brennkraftmaschine 1 eingestellt wird. Der Soll-Zündwinkelwirkungsgrad etazwsoll bezeichnet den Einfluss des Sollzündwinkels eines Zylinders relativ zu dem Kurbelwinkel der Brennkraftmaschine 1 auf die Umwandlung von chemischer Energie in Bewegungsenergie. Der Soll-Zündwinkelwirkungsgrad wird von der Motorsteuereinrichtung 16 abhängig beispielsweise von der Drehzahl der Brennkraftmaschine 1 oder einem erfassten Klopfen verändert. Die Wunschfüllungsbestimmungseinrichtung 50 ermittelt die Wunschfüllung rlwumd in gleicher Weise wie die Bosch-Motorsteuerung ME7, wie anhand von Figur 6 beschrieben worden ist. Die Wunschfüllungsbestimmungseinrichtung 50 gibt die Wunschfüllung rlwumd an eine erste Minimumsbestimmungseinrichtung 51, eine Hubabschätzungseinrichtung 52 und eine Soll-AGR-Füllungs- und Soll-Saugrohrdruckbestimmungseinrichtung 53 aus.

Die Bezugsziffer 54 bezeichnet eine Momentenreduktionseinrichtung zur Momentenreduktion über ein frühes Öffnen des Auslassventils (AV). Die Momentenreduktionseinrichtung 54ermitteltauf der Grundlage des Sollmoments misoll und des Soll-Zündwinkelwirkungsgrades etzwsoll einen Soll-Hochdruckwirkungsgrad AV etaAVsoll. Die Momentenreduktionseinrichtung 54 gibt den Soll-Hochdruckwirkungsgrad etaAVsoll an eine erste Übertragungseinrichtung 55 aus, die den Soll-Hochdruckwirkungsgrad etaAVsoll an einem ersten Synchronisationszeitpunkt Synchro 1 über den Bus 17 zu der Ventilsteuereinrichtung 20 überträgt. Die Ventilsteuereinrichtung 20 ermittelt auf der Grundlage des Soll-Hochdruckwirkungsgrades etaAVsoll einen Auslass-Öffnet-Zeitpunkt des Auslassventils 8 des Zylinders und steuert das erste Magnetventil 21 des Ventilstellers 10 entsprechend an. Auf diese Weise kann durch ein frühes Öffnen des Auslassventils 8 eine Hochdruckarbeit in dem Zylinder abgebautwerden, indem Druck aus dem Zylinder durch die Auslassöffnung in den Auspuff ausgelassen wird. Auf diese Weise wird ein Momentenbetrag dieses Zylinders zum Drehmoment der Brennkraftmaschine 1 und damit das Drehmoment der Brennkraftmaschine 1 verringert. Deshalb wird der Soll-Hochdruckwirkungsgrädes etaAVsoll auch als Sollwert betreffend eine Momentenreduktion des Zylinders bezeichnet.

Die Übertragung der ersten Übertragungseinrichtung 55 findet synchron zu einem ersten kurbelwinkelsynchronen Synchronisations-Raster der Motorsteuereinrichtung 16 statt. Dieses erste kurbelwinkelsynchrone Synchronisations-Raster ermittelt die Motorsteuereinrichtung 16 auf der Grundlage des Ausgangssignals des Kurbelwinkelsensors 6. Das erste kurbelwinkelsynchrone Synchronisations-Rasterweist zumindest den ersten Synchronisationszeitpunkt Synchro 1 auf, einen zweiten Synchronisationszeitpunkt Synchro 2, einen dritten Synchronisationszeitpunkt Synchro 3, einen vierten Synchronisationszeitpunkt Synchro 4, einen fünften Synchronisationszeitpunkt Synchro 5, einen sechsten Synchronisationszeitpunkt Synchro 6 und einen siebten Synchronisationszeitpunkt Synchro 7. Die Motorsteuereinrichtung 16 bestimmt die Synchronisationszeitpunkte dergestalt, dass der erste Synchronisationszeitpunkt Synchro 1 einen vorbestimmten Winkelbetrag vor dem oberen Zündtotpunkt ZOT des entsprechenden Zylinders der Brennkraftmaschine 1 ist. Dieser vorbestimmte Winkelbetrag ist beispielsweise 72°KW vor dem oberen Zündtotpunkt des entsprechenden Zylinders der Brennkraftmaschine 1. Die Synchronisationszeitpunkte Synchro 1 bis Synchro 7 weisen voneinander jeweils einen Abstand von einem weiteren vorbestimmten Winkelbetrag auf. Dieser weitere vorbestimmte Winkelbetrag ist bei der 4-Zylinder Brennkraftmaschine des vorliegenden Ausführungsbeispiels vorzugsweise 180°KW. Bei mehrzylindrigeren Brennkraftmaschinen ist dieser Abstand entsprechend anzupassen. Bei einer Brennkraftmaschine 1 mit n Zylindern beträgt dieser vorbestimmte Winkelbetrag vorzugsweise 720°/n. Die Datenübertragung der Übertragungseinrichtung 55 über den Bus 17 zur Ventilsteuereinrichtung 20 findet synchron zu dem aktuellen kurbelwinkelsynchronen Synchronisations-Raster der Motorsteuereinrichtung 20 statt. In anderen Worten bedeutet dies, dass die Datenübertragung, jeweils an den Synchronisationszeitpunkten Synchro1 bis Synchro7 stattfindet und noch für den nächsten zu zündenden Zylinder berücksichtigt werden kann.

Bei Empfang des Soll-Hochdruckwirkungsgrads etaAVsoll in der Ventilsteuereinrichtung 20 an einem ersten Synchronisationszeitpunkt Synchro 1 eines zweiten Synchronisations-Rasters der Ventilsteuereinrichtung 20 ermittelt die Ventilsteuereinrichtung 20 auf der Grundlage des Soll-Hochdruckwirkungsgrades etaAVsoll den Öffnungszeitpunkt des Auslassventils 8 und steuert den Ventilsteller 10 des Auslassventils 8 entsprechend an.

Die Hubabschätzungseinrichtung 52 ermittelt eine Abschätzung eines Maximalhubs des Einlassventils 7 und des Auslassventils 8, der mittels der Ventilsteller 9 und 10 erzielt werden kann. Die Hubabschätzungseinrichtung 52 ermittelt die Abschätzung des Maximalhubs auf der Grundlage eines Ausgangssignals von einer Hydraulikmediumdruckbestimmungseinrichtung 56 in der Ventilsteuereinrichtung 20, das über den Bus 17 zu der Motorsteuereinrichtung 16 übertragen wird. Die Hydraulikmediumdruckbestimmungseinrichtung 56 ermittelt das zu der Motorsteuereinrichtung 16 übertragene Ausgangssignal auf der Grundlage eines aktuellen Hydraulikmediumdrucks in der Druckversorgungseinrichtung 11. Dieses Ausgangssignal wird von Ventilsteuereinrichtung 20 synchron zu dem zweiten kurbelwinkelsynchronen Synchronisations-Raster der Ventilssteuereinrichtung 20 übertragen.

Das zweite kurbelwinkelsynchrone Synchronisations-Raster der Ventilsteuereinrichtung 20 entspricht dem ersten Synchronisations-Raster der Motorsteuereinrichtung 16, ausser, dass das zweite Synchronisations-Rasterdem ersten Synchronisations-Raster um einen vorbestimmten Winkelbetrag nacheilt. Der Winkelbetrag, um das das zweite kurbelwinkelsynchrone Synchronisations-Raster der Ventilsteuereinrichtung 20 den ersten kurbelwinkelsynchronen Synchronisations-Raster der Motorsteuereinrichtung nacheilt, ist dergestalt zu bestimmen, dass eine Übertragungszeit der entsprechenden Signale über den Bus 17 auch bei der höchsten Drehzahl der Brennkraftmaschine 1 kleiner als der vorbestimmte Winkelbetrag zwischen dem ersten Synchronisations-Raster und dem zweiten Synchronisations-Raster ist. Damit ist sichergestellt, dass die übertragenen Signale genau um den vorbestimmten Winkelbetrag nach dem Absenden von der Motorsteuereinrichtung 16 bei der Ventilsteuereinrichtung 20 empfangen werden, die darauf Ansteuersignale für das erste und das zweite Magnetventil 21 und 28 der Ventilsteller 9 und 10 des Einlass- und Auslassventils 7 und 8 ermittelt. Im vorliegenden Ausführungsbeispiel ist dieser vorbestimmte Winkelbetrag vorzugsweise 90°. Bei einer Brennkraftmaschine 1 mit n Zylindern beträgt dieser vorbestimmte Winkelbetrag vorzugsweise 720°/(2*n). Die Ventilsteuereinrichtung 20 ermittelt das zweite Synchronisations-Raster auf der Grundlage des Ausgangssignals des Kurbelwinkelsensors 6.

Die Hubabschätzungseinrichtung 52 gibt ein Signal ab, das eine Abschätzung betreffend den Maximalhub des Einlassventils 7 und des Auslassventils 8 ist und an eine Frischgasfüllungsmaximalwert-Bestimmungseinrichtung 57 weitergeleitet wird.

Die Soll-AGR-Füllung und Soll-Saugrohrdruckbesfimmungseinrichtung 53 bestimmt auf der Grundlage der Wunschfüllung rlwumd, deren Realisierbarkeit bei der nächsten Absaugung zu diesem Zeitpunkt noch ungewiss ist, einen Sollwert für die interne Restgasfüllung rfrgsoll entsprechend dem Betriebszustand der Brennkraftmaschine 1. Ferner ermittelt die Soll-AGR-Füllung und Soll-Saugrohrdruckbestimmungseinrichtung 53 eine Restgas-Steuerstrategie AGR-Strat, passend zu dem Betriebszustand der Brennkraftmaschine 1. Die Soll-AGR-Füllung und Soll-Saugrohrdruckbestimmungseinrichtung 53 überträgt die interne Restgasfüllu ng rfrgsoll und die Restgas-Steuerstrategie AGR-Strat an eine zweite Übertragungseinrichtung 58.

Die zweite Übertragungseinrichtung 58 überträgt die interne Restgasfüllung rfrgsoll und die Restgas-Steuerstrategie AGR-Strat an die Ventilsteuereinrichtung 20. Diese Übertragung findet für den aktuellen Zylinder erstmalig an dem fünften Synchronisationszeitpunkt Synchro 5 vor dem entsprechenden Synchronisations-Rasters des Zylinders statt. Wenn die zweite Übertragungseinrichtung 58 erfasst, das zu dem vierten Synchronisationszeitpunkt Synchro 4, der dem fünften Synchronisationszeitpunkt Synchro 5 folgt, eine im Vergleich zum fünften Synchronisationszeitpunkt Synchro 5 veränderte interne Restgasfüllung rfrgsoll und/oder RestgassteuerstrategieAGR-Strat an ihrem Eingang anliegt, überträgt die zweite Übertragungseinrichtung 58, die veränderte bzw. aktualisierte interne Restgasfüllung rfrgsoll und/oder die veränderte bzw. aktualisierte Restgassteuerstrategie AGR-Strat an dem vierten Synchronisationszeitpunkt Synchro 4 zu der Ventilsteuereinrichtung 20. Auf diese Weise stellt die zweite Übertragungseinrichtung 58 sicher, dass nur dann, wenn die interne Restgasfüllung rfrgsoll oder die Restgas-Steuerstrategie AGR-Strat verändert bzw. aktualisiert worden ist, eine zweite Übertragung dieser Werte über den Bus 17 zu der Ventilsteuereinrichtung 20 stattfindet. Somit wird eine minimale Datenübertragungsrate bei best möglicher Aktualisierung über den Bus 17 gewährleistet.

Nach dem Empfang des Sollwerts der internen Restgasfüllung rfrgsoll und der Restgassteuerstrategie AGR-Strat in dem vierten und/oder fünften Synchronisationszeitpunkt Synchro 4/5 des zweiten Synchronisations-Rasters der Ventilsteuereinrichtung 20, ermittelt die Ventilsteuereinrichtung 20 auf der Grundlage des Sollwerts des internen Restgases rfrgsoll und der Restgassteuerstrategie AGR-Strat den Schliesszeitpunkt des Auslassventils 8 und den Öffnungszeitpunkt des Einlassventils 7 und steuert das zweite Magnetventil 28 des Ventilstellers 10 des Auslassventils 8 und das erste Magnetventil 21 des Ventilstellers 9 des Einlassventils 7 entsprechend an.

Die Soll-AGR-Füllung und Soll-Saugrohrdruckbestimmungseinrichtung 53 ermittelt ferner auf der Grundlage der Wunschfüllung rlwumd einen Sollwert pssoll für den Saugrohrdruck in dem Saugrohr 13 und übermittelt den Sollwert pssoll an eine Drosselklappenansteuereinrichtung 59, die auf der Grundlage des Sollwerts pssoll die Drosselklappe 18 in dem Saugrohr 13 der Brennkraftmaschine 1 ansteuert.

Ferner ermittelt die Soll-AGR-Füllung und Soll-Saugrohrdruckbestimmungseinrichtung 53 auf der Grundlage der Wunschfüllung rlwumd einen Inertgas-Sollwert rfigsoll für die folgende Gasfüllung des Zylinders und gibt diesen Wert an die Frischgasfüllungsmaximalwert-Bestimmungseinrichtung 57 aus.

Die Bezugsziffer 60 bezeichnet eine Saugrohrdruckprädiktionseinrichtung, die eine Abschätzung für den Saugrohrdruck psp an dem Schliesszeitpunkt des Einlassventils 7 ermittelt. Dieser abgeschätzte Saugrohrdruck psp wird in der Saugrohrdruckprädiktionseinrichtung 60 vorzugsweise auf der Grundlage des Schliesszeitpunkts des Einlassventils 7 und der Drehzahl der Brennkraftmaschine 1 aus einem Kennfeld ausgelesen. Die Abschätzung des Saugrohrdrucks psp wird an die Frischgasfüllungsmaximalwert-Bestimmungseinrichtung 57 ausgegeben.

Die Frischgasfüllungsmaximalwert-Bestimmungseinrichtung 57 ermittelt eine maximal bei dem Zylinder in dem nächsten Arbeitsspiel zu realisierende Frischluftfüllung rlmax. Die Frischgasfüllungsmaximalwert-Bestimmungseinrichtung 57 ermittelt die maximal realisierbare Frischluftfüllung rlmax auf der Grundlage des Ausgangssignals der Hubabschätzungseinrichtung 52, des Inertgas-Sollwerts rfigsoll der von der Soll-AGR-Füllung und Soll-Saugrohrbestimmungseinrichtung 53 ausgegeben wird und der Abschätzung des Saugrohrdrucks psp der von der Saugrohrdruckprädiktionseinrichtung 60 ausgegeben wird. Die Frischgasfüllungsmaximalwert-Bestimmungseinrichtung 57 ermittelt die maximal realisierbare Frischluftfüllung rlmax vorzugsweise durch Auslesen der maximal realisierbaren Frischluftfüllung rlmax aus einem Kennfeld anhand der Eingangsgrössen der Frischgasfüllungmaximalwert-Bestimmungseinrichtung 57. Die Frischgasfüllungsmaximalwert-Bestimmungseinrichtung 57 gibt die maximal realisierbare Frischluftfüllung rlmax an die erste Minimumbestimmungseinrichtung 51 aus.

Die erste Minimumbestimmungseinrichtung 51 ermittelt eine mögliche Wunschfüllung rlwumdm unter Berücksichtigung der maximal realisierbaren Frischluftfüllung rlmax und der Wunschfüllung rlwumd. Die erste Minimumbestimmungseinrichtung 51 ermittelt die realisierbare bzw. mögliche Wunschfüllung rlwumdm, indem sie ermittelt, welche der beiden Eingangsgrössen rlwumd und rlmax die kleinere ist. Dann gibt sie die kleinere der Wunschfüllung rlwumd und der maximal realisierbaren Frischluftfüllung rlmax als mögliche Wunschfüllung rlwumdm an eine erste Bestimmungseinrichtung 61 aus.

Die erste Bestimmungseinrichtung 61 ermittelt einen Wunschwert eines abzusaugenden Kraftstoffs rkabwu aus der möglichen Wunschfüllung rlwumdm und aus dem gewünschten Soll-Lambda der Verbrennung λsoll. Statt der in Figur 4 verwendeten Grösse λsoll für das gewünschte Lambda der Verbrennung kann auch der gewünschte Lambdawirkungsgrad etalamsoll verwendet werden.

Die erste Bestimmungseinrichtung 61 gibt den Wunschwert für den abzusaugenden Kraftstoff rkabwu an eine zweite Bestimmungseinrichtung 62 aus. Der Wunschwert des abzusaugenden Kraftstoffs rkabwu gibt an, welche Menge des in das Saugrohr 13 eingespritzten Kraftstoffs bei dem Ansaugvorgang in den Zylinder abzusaugen ist.

Die Bezugsziffer 63 bezeichnet eine Kraftstoffermittlungseinrichtung. Die Kraftstoffermittlungseinrichtung 63 umfasst eine Einspritzbeobachtungseinrichtung 64, eine zweite Bestimmungseinrichtung 65, eine Wandfilmermittlungseinrichtung 66, eine dritte Bestimmungseinrichtung 67 und eine vierte Bestimmungseinrichtung 68.

Die Kraftstoffermittlungseinrichtung 63 ermittelt eine minimale bei einer folgenden Absaugung aus dem Saugrohr 13 der Brennkraftmaschine 1 abgesaugte Kraftstoffmenge rkabmin und eine maximal bei der folgenden Absaugung aus dem Saugrohr 13 der Brennkraftmaschine 1 abgesaugte Kraftstoffmenge rkabmax. Die minimale abzusaugende Kraftstoffmenge rkabmin und die maximale bei derfolgenden Absaugung aus dem Saugrohr 13 der Brennkraftmaschine 1 abzusaugende Kraftstoffmenge rkabmax geben einen Kraftstoffmengenbereich an, der sich bei der nächsten Absaugung im Brennraum des Zylinders befinden kann. Der Aufbau und die Funktionsweise der Kraftstoffermittlungseinrichtung 63 wird im folgenden beschrieben.

Die Kraftstoffermittlungseinrichtung 63 umfasst die Einspritzmengenermittlungseinrichtung 64, die mit der zweiten Bestimmungseinrichtung 65 und einer dritten Bestimmungseinrichtung 67 verbunden ist. Ferner ist die Wandfilmermittlungseinrichtung 66 vorgesehen, die mit der zweiten Bestimmungseinrichtung 65 und der dritten Bestimmungseinrichtung 67 verbunden ist. Die zweite Bestimmungseinrichtung 65 ist ebenfalls mit der dritten Bestimmungseinrichtung 67 verbunden.

Die Einspritzmengenermittlungseinrichtung 64 ermittelt auf der Grundlage des Ansteuersignals ti des Einspritzventils 12 des Zylinders der Brennkraftmaschine 1 eine seit einem vorhergehenden Schliessen des Einlassventils 7 (in dem vorhergehenden Arbeitsspiel) in das Saugrohr 13 des Zylinders eingespritzte Kraftstoffmenge rktineu und eine noch bis zum Schliessen des Einspritzventils 12 einzuspritzende Kraftstoffmenge rktimaxm. In anderen Worten gibt die Kraftstoffmenge rktineu die aktuelle nach dem letzten Schliessen des Einlassventils 7 über das Einspritzventil 12 in das Saugrohr 13 abgespritzte Kraftstoffmenge an und die Kraftstoffmenge rktimaxm gibt die noch bis zum Schliessen des Einspritzventils 12 abspritzbare Kraftstoffmenge unter Berücksichtigung der Flugzeit des Kraftstoffs an. Die Einspritzmengenbestimmungseinrichtung 64 gibt die Kraftstoffmenge rktineu an die zweite Bestimmungseinrichtung 65 aus und die Kraftstoffmenge rktimaxm an die dritte Bestimmungseinrichtung 67.

Die Wandfilmermittlungseinrichtung 66 ermittelt auf der Grundlage einer Füllungsart Fü-Art, mit der der Zylinder der Brennkraftmaschine 1 betrieben wird, einem Istwert ps des Saugrohrdrucks in dem Saugrohr 13 der Brennkraftmaschine 1, der mittels des Saugrohrdrucksensors 14 ermittelt wird und einem Faktor fdrossev für die Drosselung der Brennkraftmaschine 1 bei der Füllungssteuerung einen nach einem vorhergehenden Schliessen des Einlassventils 7 in dem Saugrohr 13 des Zylinders verbleibenden Wandfilm rkwtverb und einen nach einem kommenden Schliessen des Einlassventils 7 des Zylinders zu erwartenden Wandfilm rkwderw.

Die Füllungsart Fü-Art der Brennkraftmaschine 1 gibt an, ob der Zylinder beispielsweise mit einer frühen Füllungsstrategie oder mit einer späten Füllungsstrategie betrieben wird. Bei der frühen Füllungsstrategie wird das Einlassventil 7 des Zylinders geschlossen, sobald die gewünschte Zylinderfüllung bzw. Gasfüllung erreicht ist. Wenn dann beispielsweise eine Zylinderfüllung (Füllung mit Frischluft und Restgas) gewünscht wird, die dem halben Brennraum des Zylinders entspricht, wird das Einlassventil bei beispielsweise 90° KW nach dem oberen Totpunkt des Ladungswechsels, d. h., in etwa auf halben Weg zwischen dem oberen Totpunkt des Ladungswechsels und dem folgenden unteren Totpunkt bei der frühen Füllungsstrategie geschlossen. Bei der späten Füllungsstrategie wird eine grössere Zylinderfüllung als eigentlich gewünscht in den Zylinder gesaugt. Die überschüssige Zylinderfüllung wird jedoch bei der Aufwärtsbewegung des Kolbens von dem unteren Totpunkt des Ladungswechsels wieder durch die Einlassöffnung ausgestossen, bis nur noch die gewünschte Zylinderfüllung in dem Zylinder ist. Dann wird das Einlassventil 7 geschlossen. Wenn dann beispielsweise die Zylinderfüllung gewünscht wird, die dem halben Brennraum des Zylinders entspricht, wird das Einlassventil bei 270° KW nach dem oberen Totpunkt des Ladungswechsels, d. h. in etwa auf halben Weg zwischen dem unteren Totpunkt des Ladungswechsels und dem folgenden oberen Totpunkt der Zündung bei der späten Füllungsstrategie geschlossen. Die Füllungsstrategie wird von einer Füllungsstrategieeinstelleinrichtung 71 vorgegeben und zu der Wandfilmermittlungseinrichtung 66 übertragen.

Der Faktor fdrossev für die Drosselung bei der Füllungssteuerung ist eine Verhältniszahl betreffend die Verringerung der Füllung durch Reduktion des Hubes des Einlassventils 7 gegenüber einer Verringerung der Füllung des Brennraums des Zylinders durch ein frühes Schliessen des Einlassventils 7. Der Faktor fdrossev wird von einer Füllungsstrategieeinstelleinrichtung 71 in der Motorsteuerung 16 ermittelt.

Die Wandfilmermittlungseinrichtung 66 gibt den nach dem vorhergehenden Schliessen des Einlassventils 7 in dem Saugrohr 13 des Zylinders verbliebenen Wandfilm rkwdverb, der die noch in dem Saugrohr 13 befindliche Kraftstoffmenge angibt, an die zweite Bestimmungseinrichtung 65 aus. Die Wandfilmermittlungseinrichtung 66 gibt ferner den nach dem kommenden Schliessen des Einlassventils 7 des Zylinders zu erwartenden Wandfilm rkwderw, der die zu erwartende als Wandfilm verbleibende Kraftstoffmenge in dem Saugrohr 13 angibt, an die dritte Bestimmungseinrichtung 67 aus. Überdies gibt die Wandfilmermittlungseinrichtung 66 den nach dem kommenden Schliessen des Einlassventils 7 des Zylinders zu erwartenden Wandfilm rkwderw an eine vierte Bestimmungseinrichtung 68 aus.

Die zweite Bestimmungseinrichtung 65 ermittelt eine gesamte aktuell vorgelagerte Kraftstoffmenge rkaktges und gibt diese an die dritte Bestimmungseinrichtung 67 aus. Ferner gibt die zweite Bestimmungseinrichtung 65 die gesamte aktuell vorgelagerte Kraftstoffmenge rkaktges an eine zweite Bestimmungseinrichtung 68 aus. Die zweite Bestimmungseinrichtung 65 ermittelt die gesamte aktuell vorgelagerte Kraftstoffmenge rkaktges mittels Addition des von der Wandfilmermittlungseinrichtung 66 ausgegebenen nach dem vorhergehenden Schliessen des Einlassventils 7 in dem Saugrohr 13 des Zylinders verbliebenen Wandfilm rkwdverb und der von der Einspritzermittlungseinrichtung 64 ausgegebenen aktuell nach dem letzten Schliessen des Einlassventils über das Einspritzventil abgespritzten Kraftstoffmenge rktineu:

$$rkaktges = rkwdverb + rktineu.$$

Die dritte Bestimmungseinrichtung 67 ermittelt die maximal absaugbare Kraftstoffmenge rkabmax durch Addition des gesamten aktuell vorgelagerten Kraftstoffs rkaktges mit der bis zum Schliessen des Einspritzventils 14 abspritzbaren Kraftstoffmenge rktimaxm und folgender Subtraktion des nach-dem kommenden Schliessen des Einlassventils 7 des Zylinders zu erwartenden Wandfilms rkwaderw:

$$rkabmax = rkaktges + rktimaxm - rkwderw.$$

Ferner ermittelt die dritte Bestimmungseinrichtung 67 die minimal absaugbare Kraftstoffmenge durch Subtraktion des nach dem kommenden Schliessen des Einlassventils 7 zu erwartenden Wandfilms rkwderw von der gesamten aktuell vorgelagerten Kraftstoffmenge rkaktges:

$$rkabmin = rkaktges - rkwderw.$$

Die zweite Bestimmungseinrichtung 62 ermittelt auf der Grundlage des Wunschwerts der abgesaugten Kraftstoffmenge rkabwu, der maximal absaugbaren Kraftstoffmenge rkabmax und der minimal absaugbaren Kraftstoffmenge rkabmin einen Sollwert für die abgesaugte Kraftstoffmenge rkabsoll. Diese Kraftstoffmenge rkabsoll, wie auch die entsprechende Frischluftfüllung des Zylinders, ist bei der nächsten Absaugung realisierbar. Hierzu ermittelt die zweite Bestimmungseinrichtung 62, welche der beiden folgenden Grössen grösser ist: der Wunschwert der abgesaugten Kraftstoffmenge rkabwu oder die minimal absaugbare Kraftstoffmenge rkabmin. Die grössere der beiden Kraftstoffmengen rkabwu und rkabmin wird dann mit der maximal absaugbaren Kraftstoffmenge rkabmax verglichen. Die kleinere Kraftstoffmenge dieses Vergleichs wird gleich dem Sollwert der abgesaugten Kraftstoffmenge rkabsoll gesetzt. Zusammengefasst führt die zweite Bestimmungseinrichtung 62 folgende Berechnung aus:

$$rkabsoll = MIN \; [rkabmax, \; MAX \; (rkabwu, \; rkabmin)].$$

Die zweite Bestimmungseinrichtung 62 gibt den Sollwert der abgesaugten Kraftstoffmenge rkabsoll an die vierte Bestimmungseinrichtung 68 und eine Soll-Füllungsbestimmungseinrichtung 69 aus.
Die vierte Bestimmungseinrichtung 68 ermittelt eine Kraftstoffmenge rksollfehl, die bis zur Absaugung nach dem kommenden Synchronisationszeitpunkt Synchro 1 noch abzusetzen, d. h., einzuspritzen ist. Die vierte Bestimmungseinrichtung 68 ermittelt die noch einzuspritzende Kraftstoffmenge rksollfehl durch Addition des Sollwerts der abgesaugten Kraftstoffmenge rkabsoll von der zweiten Bestimmungseinrichtung 62 mit dem nach dem kommenden Schliessen des Einlassventils 7 zu erwartenden Wandfilm rkwderw und folgender Subtraktion der mittels der zweiten Bestimmungseinrichtung 65 ermittelten gesamten aktuell vorgelagerten Kraftstoffmenge rkaktges. Zusammengefasst führt die vierte Bestimmungseinrichtung 68 folgende Berechnung aus:

$$rksollfeh = rkabsoll + rkwderw - rkaktges.$$

Die vierte Bestimmungseinrichtung 68 gibt die noch nach dem folgenden Synchro für die nächste Füllung abzuspritzende Kraftstoffmenge rksollfehl an eine Einspritzventilsteuereinrichtung 70 aus. Die Einspritzventilsteuereinrichtung 70 ermittelt auf der Grundlage des Ausgangssignals der vierten Bestimmungseinrichtung 68 das Ansteuersignal ti für das Einspritzventil 12. Die Einspritzventilsteuereinrichtung 70 gibt das Ansteuersignal ti an das Einspritzventil 12 und die Einspritzmengenermittlungseinrichtung 64 aus.
Die Soll-Füllungsbestimmungseinrichtung 69 ermittelt auf der Grundlage des Sollwerts des Soll-Lambdas der Verbrennung λsoll und dem Sollwert der abgesaugten Kraftstoffmenge rkabsoll die Soll-Frischgasfüllung rlsoll des Zylinders. Die Soll-Frischgasfüllung rlsoll des Zylinders bezeichnet die eine Füllung des Zylinders mit Frischluft. Vorzugsweise liesst die Soll-Füllungsbestimmüngseinrichtung 69 die Soll-Frischgasfüllung rlsoll auf der Grundlage der Eingangsgrössen λsoll und rkabsoll aus einem Kennfeld aus. Die Soll-Füllungsbestimmungseinrichtung 69 gibt die Soll-Frischgasfüllung rlsoll an die Füllungsstrategieeinstelleinrichtung 71 aus.
Die Füllungsstrategieeinstelleinrichtung 71 stellt beispielsweise durch frühes oder spätes Schliessen des Einlassventils 7 die frühe oder die späte Füllungsstrategie bei dem Zylinder ein oder stellt durch Einstellen eines frühen oder späten Einlassventilschliesszeitpunktes in Verbindung mit einem reduzierten Hub des Einlassventils 7 eine Mischstrategie ein. Die Füllungsstrategieeinstelleinrichtung 71 ermittelt entsprechend der Füllungsstrategie den Faktor fdrossev für die Drosselung bei der Füllungssteuerung und ein Ausgangssignal Fü-Art entsprechend der Füllungsstrategie und gibt den Faktor fdrossev, die Füllungsart Fü-Art und die Soll-Frischgasfüllung rlsoll an eine dritte Übertragungseinrichtung 72 aus. Ferner gibt die Füllungsstrategieeinstelleinrichtung 71 den Faktor fdrossev für die Drosselung und die Füllungsart Fü-Art an die Wanfimermittlungseinrichtung 66 aus. Die Füllungsstrategie ist vorzugsweise in der Füllungsstrategieeinstelleinrichtung 71 voreingestellt.
Die dritte Übertragungseinrichtung 72 überträgt den Faktor fdrossev, die Soll-Frischgasfüllung rlsoll und die Füllungsart Fü-Art zu dem fünften Synchronisationszeitpunkt Synchro 5 der Motorsteuereinrichtung 16 zu der Ventilsteuereinrichtung 20. An dem folgenden Synchronisationszeitpunkt, nämlich dem dritten Synchronisationszeitpunkt Synchro 3 vergleicht die dritte Übertragungseinrichtung 72 die an dem vierten Synchronisationszeitpunkt Synchro 4 an die Steuereinrichtung 20 übertragene Soll-Frischgasfüllung rlsoll mit einer bei dem dritten Synchronisationszeitpunkt Synchro 3 an der dritten Übertragungseinrichtung 72 anliegenden Soll-Frischgasfüllung rlsoll. Wenn sich die Soll-Frischgasfüllung rlsoll, die an dem dritten Synchronisationszeitpunkt Synchro 3 an der dritten Übertragungseinrichtung 72 anliegt, von der Soll-Frischgasfüllung rlsoll, die an dem vierten Synchronisationszeitpunkt Synchro 3 zu der Ventilsteuereinrichtung 20 übertragen worden ist, unterscheidet, überträgt die dritte Übertragungseinrichtung 72 die an dem dritten Synchronisationszeitpunkt Synchro 3 an der dritten Übertragungseinrichtung 72 anliegende Soll-Frischgasfüllung rlsoll zu der Ventilsteuereinrichtung 20. Unterscheiden sich die Soll-Frischgasfüllungen rlsoll an dem dritten und an dem vierten Synchronisationszeitpunkt Synchro 3 nicht, findet keine Übertragung zu der Ventilsteuereinrichtung 20 statt. Damit wird eine minimale Datenübertragungsrate auf dem Bus 17 gewährleistet.
Bei Empfang des Faktors fdrossev, der Soll-Frischgasfüllung rlsoll und der Füllungsart Fü-Art ermittelt die Ventilsteuereinrichtung 20 in dem vierten Synchronisationszeitpunkt Synchro 4 des zweiten Synchronisations-Rasters der Ventilsteuereinrichtung 20 den Sollhub des Einlassventils 7 und beendet die Ansteuerung des ersten Magnetventils 21 des Ventilstellers 9 des Einlassventils 7 in entsprechender Weise. Ferner ermittelt die Einlassventilsteuereinrichtung 20 nach Empfang des Faktors fdrossev, der Soll-Frischgasfüllung rlsoll und der Füllungsart Fü-Art einen Schliesszeitpunkt des Einlassventils 7 an dem dritten Synchronisationszeitpunkt Synchro 3 der Ventilsteuereinrichtung 20 und steuert das zweite Magnetventil 28 des Ventilstellers 9 des Einlassventils 7 entsprechend an.

Obwohl die erste Übertragungseinrichtung 55, die zweite Übertragungseinrichtung 58 und die dritte Übertragungseinrichtung 72 in diesem Ausführungsbeispiel als einzelne Übertragungseinrichtungen ausgeführt sind, ist es auch möglich, die erste, die zweite und die dritte Übertragungseinrichtung 55, 58 und 72 mittels einer Übertragungseinrichtung auszugestalten.

Die in der Wunschfüllungsbestimmungseinrichtung 50, der Hubabschätzungseinrichtung 52, der Soll-AGR-Füllung und Soll-Saugrohrdruckbestimmungseinrichtung 53, der Momentenreduktionseinrichtung 54 und der Drosselklappenansteuereinrichtung 59 ermittelten Ausgangsgrössen -die im folgenden als allgemeine Ausgangsgrössen bezeichnet werden- gelten gleich für alle vier Zylinder der Brennkraftmaschine 1. Die oben beschriebenen Vorgänge zur Ermittlung der Ausgangsgrössen der Wunschfüllungsbestimmungseinrichtung 50, der Hubabschätzungseinrichtung 52, der Soll-AGR-Füllung und Soll-Saugrohrdruckbestimmungseinrichtung 53, der Momentenreduktionseinrichtung 54 und der Drosselklappenansteuereinrichtung 59 zur Bestimmung der allgemeinen Ausgangsgrössen werden bei jedem Synchronisationszeitpunkt Synchro 1 bis Synchro 7 des ersten Synchronisations-Rasters der Motorsteuereinrichtung 16 ausgeführt, so dass zu jedem Synchronisationszeitpunkt Synchro 1 bis Synchro 7 des ersten Synchronisations-Rasters der Motorsteuereinrichtung 16 die Ausgangsgrössen dieser Einrichtungen neu berechnet werden.

Die Ausgangsgrössen der ersten Minimumbestimmungseinrichtung 51, der Frischgasfüllungsmaximalwert-Bestimmungseinrichtung 57, der Saugrohrdruckprädiktionseinrichtung 60, der ersten Bestimmungseinrichtung 61, der zweiten Minimum bestimmungs einrichtung 62, der Einspritzmengenermittlungseinrichtung 64, derzweiten Bestimmungseinrichtung 65, der Wandfilmermittlungseinrichtung 66, derdritten Bestimmungseinrichtung 67, dervierten Bestimmungseinrichtung 68, der Einspritzventilsteuereinrichtung 70, der Soll-Füllungsbestimmungseinrichtung 69 und der Füllungsstrategieeinstelleinrichtung 71 werden zylinderindividuell, d. h. einzeln für jeden der vier Zylinder der Brennkraftmaschine 1, ermittelt. Diese Ausgangsgrössen werden im folgenden als individuelle Ausgangsgrössen bezeichnet. Die individuellen Ausgangsgrössen werden je nach Betriebszustand der Brennkraftmaschine 1 bis zu fünffach bei den folgenden Synchronisationszeitpunkten berechnet.

Bei einem Betriebszustand in dem die Brennkraftmaschine 1 bei Vollast mit hoher Drehzahl betrieben wird, werden die individuellen Ausgangsgrössen wie folgt berechnet: Zum ersten Mal werden die individuellen Ausgangsgrössen zum siebten Synchronisationszeitpunkt Synchro 7 berechnet, da dies bei Vollast mit hoher Drehzahl der frühest mögliche Einspritzbeginn ist. Das zweite Mal werden individuellen Ausgangsgrössen zum sechsten Synchronisationszeitpunkt Synchro 6 berechnet, da bei Vollast und hoher Drehzahl zu diesem Zeitpunkt der Einspritzbeginn aktualisiert wird. Das dritte Mal werden individuellen Ausgangsgrössen an dem fünften Synchronisationszeitpunkt Synchro 5 ermittelt, da zum fünften Synchronisationszeitpunkt Synchro 5 der Sollwert des internen Restgases rfrgsoll, d. h. die interne Restgasfüllung, ermittelt wird. Die individuellen Ausgangsgrössen werden ein viertes Mal an dem vierten Synchronisationszeitpunkt Synchro 4 ermittelt, da an dem vierten Synchronisationszeitpunkt Synchro 4 die Soll-Frischgasfüllung rlsoll des Zylinders ermittelt wird und ein neuer aktualisierter Sollwert des internen Restgases rfrgsoll ermittelt wird. Fernerwerden die individuellen Ausgangsgrössen ein fünftes Mal an dem dritten Synchronisationszeitpunkt Synchro 3 berechnet, an dem eine neue Soll-Frischgasfüllung rlsoll ermittelt wird.

Wenn die Brennkraftmaschine 1 nicht bei Vollast und hohen Drehzahlen betrieben wird, werden die individuellen Ausgangsgrössen das erste Mal in dem sechsten Synchronisationszeitpunkt Synchro 6 berechnet, da bei diesem Betriebszustand zu diesem Zeitpunkt das erste Mal der Einspritzbeginn ermittelt wird.

Die beschriebene Ermittlung der individuellen Ausgangsgrössen wird dergestalt ausgeführt, dass alle Grössen in der aufgezählten Reihenfolge von dem siebten Synchronisationszeitpunkt Synchro 7 bis zu dem vierten Synchronisationszeitpunkt Synchro 4 ermittelt werden. Dann wird an dem vierten Synchronisationszeitpunkt Synchro 4 die Soll-Frischgasfüllung rlsoll über den Bus 17 an die Ventilsteuereinrichtung 20 übertragen. Erst nach der Übertragung der Soll-Frischgasfüllung rlsoll wird dann eine weitere aktuelle Soll-Frischgasfüllung rlsoll zu dem dritten Synchronisationszeitpunkt Synchro 3 berechnet.

Bei einer mehrzylindrigen Maschine müssen ja fürjeden einzelnen Zylinder die Grössen im Voraus berechnet werden. Die Rechnerreihenfolge beginnt bevorzugt bei Synchro 3 und endet bei Synchro 7. Wie beschrieben muss für jeden Zylinder bis zu 7 Synchros im Voraus berechnet werden. Synchro 3 heißt die Berechnung der Werte, die im Arbeitstakt des Zylinders 3 Synchros später zur Anwendung kommen sollen. Entsprechend dieser Rechenreihenfolge soll mit dem zeitlich am nächsten liegendem Synchro angefangen werden, um die unmittelbar in der Zukunft benötigten Grössen schon "auf die Reise" schicken zu können. Nach dem 4. In der Zukunft liegenden Synchro schickt man z.B. die Füllung des dazugehörigen Zylinders.

Figur 4 zeigt ein Diagramm zur Erläuterung der Ausgangssignalübertragung von der ersten Signalübertragungseinrichtung 55, der zweiten Signalübertragungseinrichtung 58 und der dritten Signalübertragungseinrichtung 57 in der Motorsteuereinrichtung 16 zu der Ventilsteuereinrichtung 20.

Entlang der Abszisse von Figur 5 ist der Kurbelwinkel $\alpha°KW$ für ein Arbeitsspiel von einem vorhergehenden Zünd-UT bei 0° bis zu dem Zünd-UT dieses Arbeitsspiels bei 720° KW angetragen. Ferner sind in Diagramm 5 Synchronisationszeitpunkte Synchro 1 bis Synchro 5 des Synchronisations-Rasters der Motorsteuereinrichtung 16 angetragen. Der fünfte Synchronisationszeitpunkt Synchro 5 ist 72° KW vor dem vorhergehenden Zünd-OT bei 0° KW angetragen. Im Abstand von 180° KW von dem fünften Synchronisationszeitpunkt Synchro 5 ist bei 108° KW der vierte Synchronisationszeitpunkt Synchro 4 der Motorsteuereinrichtung 16 angetragen. Der dritte Synchronisationszeitpunkt Synchro 3 ist bei 288° KW angetragen, der zweite Synchronisationszeitpunkt Synchro 2 bei 468° KW und der erste Synchronisationszeitpunkt Synchro 1 bei 648° KW, d. h. 72° KWvordemZünd-OT bei 720° KW. Wie anhand von Figur 4 dargelegt wurde, wird bei dem fünften Synchron isationszeitpunkt Synchro 5 der Motorsteuereinrichtung 16 die Restg assteuer-Strategie AGR-Strat und der Sollwert des internen Restgases rfrgsoll übertragen. Dann wird an dem vierten Synchronisationszeitpunkt Synchro 5 bei 108° KW je nachdem, ob neue Werte für den Sollwert des internen Restgases rfrgsoll oder der Restgassteuerstrategie AGR-Strat vorliegen, neue Werte übertragen bzw. aktualisiert. Ferner werden bei dem vierten Synchronisationszeitpunkt Synchro 4 der Faktor fdrossev, die Soll-Frischgasfüllung rlsoll und die Füllungsart Fü-Art zu der Ventilsteuereinrichtung 20 übertragen.

Im folgenden wird bei dem dritten Synchronisationszeitpunkt Synchro 3 der Motorsteuereinrichtung bei 288° KW je nach dem, ob neue Werte für den Faktor fdrossev, für die Soll-Frischgasfüllung rlsoll oder die Füllungsart Fü-Art vorliegen, die neuen Werte zu der Ventilsteuereinrichtung 20 übertragen. Diese Übertragung bei dem dritten Synchronisationszeitpunkt Synchro 3 ist insbesondere bei niedrigen Drehzahlen der Brennkraftmaschine 1 erforderlich. An dem zweiten Synchronisationszeitpunkt Synchro 2 bei 468° KW findet keine Übertragung zwischen der Motorsteuereinrichtung 16 und der Ventilsteuereinrichtung 20 statt. Bei dem ersten Synchronisationszeitpunkt Synchro 1 der Motorsteuereinrichtung 16 bei 648° KW überträgt die erste Übertragungseinrichtung 55 der Motorsteuereinrichtung 16 den Soll-Hochdruckwirkungsgrad etaAVsoll zu der Ventilsteuereinrichtung 20.

Mit dem oben beschriebenen Ausführungsbeispiel der Steueranordnung und dem anhand der Steueranordnung beschriebenen Verfahren wird die Füllungssteuerung der Zylinder der Brennkraftmaschine 1 synchronisiert und eine schnellstmögliche Umsetzung von Drehmomentänderungen bei optimalem Wirkungsgrad und einer Einhaltung einer vorgegebenen Fettigkeit derVerbrennung realisiert. Überdies wird die Rechenbelastung in der Motorsteuereinrichtung 16 und der Ventilsteuereinrichtung 20 auf ein Mindestmass beschränkt. Ebenso ist mittels der oben beschriebenen Steueranordnung und dem entsprechenden Verfahren eine Beschränkung der Datenübertragungsrate zwischen der Motorsteuereinrichtung 16 und der Ventilsteuereinrichtung 20 auf ein Mindestmass möglich. Die schnelle Umsetzung von Drehmomentenänderungen wird durch eine sehr schnelle Füllungsdynamik erreicht. Die schnelle Füllungsdynamik ermöglicht ebenso ein Absenken einer Leerlaufdrehzahl und eine Reduzierung eines ZündwinkeJvorbehalts bei der Leerlaufdrehzahlregelung bei einer sehr guten Leerlaufqualität. Überdies ermöglicht die oben beschriebene Steueranordnung und das entsprechende Verfahren eine schnelle Reduzierung von Drehmomentbeiträgen der einzelnen Zylinder der Brennkraftmaschine 1 zu dem Drehmoment der Brennkraftmaschine 1 durch ein frühes Öffnen des Auslassventils 8 der Brennkraftmaschine 1.

Obwohl das obige Ausführungsbeispiel auf eine Vierzylinder-Brennkraftmaschine gerichtet ist, ist es für den Fachmann offensichtlich, dass die vorliegende Erfindung auch auf Brennkraftmaschinen mit mehr als vier Zylindern anwendbar ist. Dabei verschieben sich die oben angegebenen Zeitpunkte in entsprechender Weise. So sind beispielsweise bei einer Brennkraftmaschine mit n Zylindern die entsprechenden Grössen nicht 7 Synchros vorauszuschicken, sondern (2*n)-1 Synchros.

**Patentansprüche**

1. Steueranordnung für eine Brennkraftmaschine (1) mit einem Zylinder mit einem Einlass- und einem Auslassventil (7, 8) mit voll-variablem Ventiltrieb (9,10), umfassend:

   eine Motorsteuereinrichtung (16) zur Ermittlung von Sollwerten betreffend eine Frischgasfüllung (rlsoll), eine interne Restgasfüllung (nfrgsoll), eine Momentenreduktion (etaAVsoll), eine Restgassteuerstrategie (AGR-Strat) und eine Füllungsstrategie (Fü-Art) des Zylinders der Brennkraftmaschine (1);
   eine Übertragungseinrichtung (17, 55, 58, 72) zur kurbelwinkelsynchronen Übertragung der mittels der Motorsteuereinrichtung (16) ermittelten Sollwerte betreffend die Frischgasfüllung (rlsoll), die Füllungsstrategie (Fü-Art), die interne Restgasfüllung (rfrgsoll), die Restgassteuerstrategie (AGR-Strat) und die Momentenreduktion (etaAVsoll) zu einer Ventilsteuereinrichtung (20);

   wobei die Ventilsteuereinrichtung (20) den voll-variablen Ventiltrieb (9, 10) des Einlass- und des Auslassventils (7, 8) des Zylinders der Brennkraftmaschine (1) auf der Grundlage der Sollwerte betreffend die Frischgasfüllung (rlsoll), die interne Restgasfüllung (rfrgsoll), die Momentenreduktion (etaAVsoll), die Restgassteuerstrategie (AGR-Strat) und die Füllungsstrategie (Fü-Art) ansteuert,
   **dadurch gekennzeichnet, dass** die Motorsteuereinrichtung (16) auf der Grundlage eines Ausgangssignals eines Kurbelwinkelsensors (6) ein erstes kurbelwinkelsynchrones Synchronisations-Raster ermittelt, die Übertragungseinrichtung (17, 55, 58, 72) die Sollwerte betreffend die Frischgasfüllung (rlsoll), die interne Restgasfüllung (rfrgsoll), die Momentenreduktion (etaAVsoll), die Restgassteuerstrategie (AGR-Strat) und die Füllungsstrategie (Fü-Art) synchron zu dem ersten kurbelwinkelsynchronen Synchronisations-Raster der Motorsteuereinrichtung (16) zu der Ventilsteuereinrichtung (20) überträgt und die Ventilsteuereinrichtung (20) auf der Grundlage des Ausgangssignals des Kurbelwinkelsensors (6) ein zweites kurbelwinkelsynchrones Synchronisations-Raster ermittelt, wobei das zweite Synchronisations-Raster dem ersten Synchronisations-Raster um einen ersten vorbestimmten Winkelbetrag nacheilt.

2. Steueranordnung nach Anspruch 1, **dadurch gekennzeichnet, dass** das erste kurbelwinkelsynchrone Synchronisations-Raster zumindest einen ersten Synchronisationszeitpunkt (Synchro 1), einen zweiten Synchronisationszeitpunkt (Synchro 2), einen dritten Synchronisationszeitpunkt (Synchro 3), einen vierten Synchronisationszeitpunkt (Synchro 4) und einen fünften Synchronisationszeitpunkt (Synchro 5) aufweist, wobei der erste Synchronisationszeitpunkt (Synchro 1) einen zweiten vorbestimmten Winkelbetrag vor einem oberen Zündtotpunkt (ZOT) des Zylinders der Brennkraftmaschine (1) ist, der zweite Synchronisationszeitpunkt (Synchro 2) einen dritten vorbestimmten Winkelbetrag vor dem ersten Synchronisationszeitpunkt (Synchro 1) ist, der dritte Synchronisationszeitpunkt (Synchro 3) den dritten vorbestimmten Winkelbetrag vor dem zweiten Synchronisationszeitpunkt (Synchro 2) ist, der vierte Synchronisationszeitpunkt (Synchro 4) den dritten vorbestimmten Winkelbetrag vor dem dritten Synchronisationszeitpunkt (Synchro 3) ist und der fünfte Synchronisationszeitpunkt (Synchro 5) den dritten vorbestimmten Winkelbetrag vor dem vierten Synchronisationszeitpunkt (Synchro 4) ist, und die Übertragungseinrichtung (17, 55, 58, 72) die Sollwerte betreffend die interne Restgasfüllung (rfrgsoll) und die Restgassteuerstrategie (AGR-Strat) an dem fünften Synchronisationszeitpunkt (Synchro 5) zu der Ventilsteuereinrichtung (20) überträgt und die Sollwerte betreffend die Frischgasfüllung (rlsoll) und die Füllungsstrategie (Fü-Art) an dem vierten Zynchronisationszeitpunkt und den Sollwert betreffend die Momentenreduktion (etaAVsoll) an dem ersten Synchronisationszeitpunkt (Synchro 1).

3. Steueranordnung nach Anspruch 2, **dadurch gekennzeichnet, dass** die Übertragungseinrichtung (17, 55, 58, 72) an dem vierten Synchronisationszeitpunkt (Synchro 4) aktualisierte Sollwerte betreffend die interne Restgasfüllung (rfrgsoll) und die Restgassteuerstrategie (AGR-Strat) überträgt und aktualisierte Sollwerte betreffend die Frischgasfüllung (rlsoll) und die Füllungsstrategie (Fü-Art) an dem dritten Synchronisationszeitpunkt zu der Ventilsteuereinrichtung (20) überträgt.

4. Steueranordnung nach einem der Ansprüche 1 bis 3, **dadurch gekennzeichnet, dass** in der Motorsteuereinrichtung (16) eine Kraftstoffermittlungseinrichtung (63) zur Ermittlung einer minimalen, bei einer folgenden Absaugung aus einem Saugrohr (13) der Brennkraftmaschine (1) abgesaugten Kraftstoffmenge (rkabmin) und einer maximalen, bei der folgenden Absaugung aus dem Saugrohr (13) der Brennkraftmaschine (1) abgesaugten Kraftstoffmenge (rkabmax) vorgesehen ist.

5. Steueranordnung nach Anspruch 4, **dadurch gekennzeichnet, dass** die Kraftstoffermittlungseinrichtung (63) eine Einspritzmengenermittlungseinrichtung (64) umfasst, wobei die Einspritzmengenermittlungseinrichtung (64) auf der Grundlage eines Ansteuersignal (ti) eines Einspritzventils (12) des Zylinders der Brennkraftmaschine (1) eine seit einem vorhergehenden Schliessen des Einlassventils (7) in das Saugrohr (13) des Zylinders eingespritzte Kraftstoffmenge (rktineu) und eine noch bis zum Schliessen des Einspritzventils (12) einzuspritzende Kraftstoffmenge (rktimaxm) ermittelt.

6. Steueranordnung nach Anspruch 4 oder 5, **dadurch gekennzeichnet, dass** die Kraftstoffermittlungseinrichtung (63) eine Wandfilmermittlungseinrichtung (66) umfasst, zur Ermittlung eines nach einem vorhergehenden Schliessen des Einlassventils (7) in dem Saugrohr (13) des Zylinders verbliebenen Wandfilms (rkwdverb) und eines nach einem kommenden Schliessen des Einlassventils (7) des Zylinders zu erwartenden Wandfilms (rkwderw).

7. Steueranordnung nach Anspruch 1, **dadurch gekennzeichnet, dass** der erste Winkelbetrag bei einer Brennkraftmaschine (1) mit n Zylindern 720°/2*n beträgt.

8. Steueranordnung nach Anspruch 2, **dadurch gekennzeichnet, dass** der dritte Winkelbetrag bei einer Brennkraftmaschine (1) mit n Zylindern 720°/n beträgt.

9. Verfahren zum Steuern eines Betriebs einer Brennkraftmaschine (1) mit einem Zylinder mit einem Einlass- und einem Auslassventil (7,8) mit voll-variablem Ventiltrieb (9, 10), umfassend folgende Schritte:

Ermittlung von Sollwerten betreffend eine Frischgasfüllung (rlsoll), eine interne Restgasfüllung (rfrgsoll), eine Momentenreduktion (etaAVsoll), eine Restgassteuerstrategie (AGR-Strat) und eine Füllungsstrategie (Fü-Art) des Zylinders der Brennkraftmaschine (1);

kurbelwinkelsynchrones Übertragen der ermittelten Sollwerte betreffend die Frischgasfüllung (rlsoll), die Füllungsstrategie (Fü-Art), die interne Restgasfüllung (rfrgsoll), die Restgassteuerstrategie (AGR-Strat) und die Momentenreduktion (etaAVsoll) von einer Motorsteuereinrichtung (16) zu einer Ventilsteuereinrichtung (20); und

Ansteuern des voll-variaben Ventiltriebs (9, 10) des Einlass- und des Auslassventils (7, 8) des Zylinders der Brennkraftmaschine (1) auf der Grundlage der Sollwerte betreffend die die Frischgasfüllung (rlsoll), die interne Restgasfüllung (rfrgsoll), die Momentenreduktion (etaAVsoll), die Restgassteuerstrategie (AGR-Strat) und die Füllungsstrategie (Fü-Art),

**gekennzeichnet durch** folgende Schritte:

Ermitteln eines ersten kurbelwinkelsynchronen Synchronisations-Rasters auf der Grundlage eines Ausgangssignals eines Kurbelwinkelsensors (6) und Betreiben der Motorsteuereinrichtung (16) synchron zu dem ersten Synchronisations-Raster;

Übetragen der Sollwerte betreffend die Frischgasfüllung (rlsoll), die interne Restgasfüllung (rfrgsoll), die Momentenreduktion (etaAVsoll), die Restgassteuerstrategie (AGR-Strat) und die Füllungsstrategie (Fü-Art) synchron zu dem ersten kurbelwinkelsynchronen Synchronisations-Raster der Motorsteuereinrichtung (16) von der Motorsteuereinrichtung (16) zu der Ventilsteuereinrichtung (20);

Ermitteln eines zweiten kurbelwinkelsynchronen Synchronisations-Rasters, wobei das zweite Synchronisations-Raster dem ersten Synchronisations-Raster um einen ersten vorbestimmten Winkelbetrag nacheilt, und Betreiben der Ventilsteuereinrichtung (20) synchron zu dem zweiten Synchronisations-Raster.

10. Verfahren nach Anspruch 9, **dadurch gekennzeichnet, dass** das erste kurbelwinkelsynchrone Synchronisations-Raster zumindest einen ersten Synchronisationzeitpunkt (Synchro 1), einen zweiten Synchronisationzeitpunkt (Synchro 2), einen dritten Synchronisationszeitpunkt (Synchro 3), einen vierten Synchronisationszeitpunkt (Synchro 4) und einen fünften Synchronisationszeitpunkt (Synchro 5) aufweist, wobei der erste Synchronisationzeitpunkt (Synchro 1) einen zweiten vorbestimmten Winkelbetrag vor einem oberen Zündtotpunkt (ZOT) eines Zylinders der Brennkraftmaschine (1) ist, der zweite Synchronisationzeitpunkt (Synchro 2) einen dritten vorbestimmten Winkelbetrag vor dem ersten Synchronisationzeitpunkt (Synchro 1) ist, der dritte Synchronisationszeitpunkt (Synchro 3) den dritten vorbestimmten Winkelbetrag vor dem zweiten Synchronisationzeitpunkt (Synchro 2) ist, der vierte Synchronisationszeitpunkt (Synchro 4) den dritten vorbestimmten Winkelbetrag vor dem dritten Synchronisationszeitpunkt (Synchro 3) ist und der fünfte Synchronisationszeitpunkt (Synchro 5) den dritten vorbestimmten Winkelbetrag vor dem vierten Synchronisationszeitpunkt (Synchro 4) ist, und die Übertragungseinrichtung (17, 55, 58, 72) die Sollwerte betreffend die interne Restgasfüllung (rfrgsoll) und die Restgassteuerstrategie (AGR-Strat) an dem fünften Synchronisationszeitpunkt (Synchro 5) zu der Ventilsteuereinrichtung (20) überträgt und die Sollwerte betreffend die Frischgasfüllung (rlsoll) und die Füllungsstrategie (Fü-Art) an dem vierten Zynchronisationszeitpunkt und den Sollwert betreffend die Momentenreduktion (etaAVsoll) an dem ersten Synchronisationszeitpunkt (Synchro 1).

11. Verfahren nach Anspruch 10, **dadurch gekennzeichnet, dass** an dem vierten Synchronisationszeitpunkt (Synchro 4) aktualisierte Sollwerte betreffend die interne Restgasfüllung (rfrgsoll) und die Restgassteuerstrategie (AGR-Strat) zu der Ventilsteuereinrichtung (20) übertragen werden und aktualisierte Sollwerte betreffend die Frischgasfüllung (rlsoll) und die Füllungsstrategie (Fü-Art) an dem dritten Synchronisationszeitpunkt zu der Ventilsteuereinrichtung (20) übertragen werden.

12. Verfahren nach einem der Ansprüche 9 bis 11, **gekennzeichnet durch** folgenden Schritt:

Ermitteln einer minimalen, bei einer folgenden Absaugung aus einem Saugrohr (13) der Brennkraftmaschine (1) abgesaugten Kraftstoffmenge (rkabmin) und einer maximalen, bei der folgenden Absaugung aus dem Saugrohr (13) der Brennkraftmaschine (1) abgesaugten Kraftstoffmenge (rkabmax).

13. Verfahren nach Anspruch 12, **gekennzeichnet durch** folgenden Schritt:

Ermitteln einer seit einem vorhergehenden Schliessen des Einlassventils (7) in das Saugrohr (13) des Zylinders eingespritzten Kraftstoffmenge (rktineu) und einer noch bis zum Schliessen des Einspritzventils (7) einzuspritzenden Kraftstoffmenge (rktimaxm) auf der Grundlage eines Ansteuersignal (ti) eines Einspritzventils (12) des Zylinders der Brennkraftmaschine (1).

**14.** Verfahren nach Anspruch 12 oder 13, **gekennzeichnet durch** folgenden Schritt:

Ermitteln eines nach einem vorhergehenden Schliessen des Einlassventils (7) in dem Saugrohr (13) des Zylinders verbliebenen Wandfilms (rkwdverb) und eines nach einem kommenden Schliessen des Eilnassventils (7) des Zylinders zu erwartenden Wandfilms (rkwderw).

**15.** Verfahren nach Anspruch 13, **dadurch gekennzeichnet, dass** der erste Winkelbetrag bei einer Brennkraftmaschine (1) mit n Zylindern 720°/2*n beträgt.

**16.** Verfahren nach Anspruch 10, **dadurch gekennzeichnet, dass** derdritte Winkelbetrag bei einer Brennkraftmaschine (1) mit n Zylindern 720°/n beträgt.

**Claims**

**1.** Control arrangement for an internal combustion engine (1) having a cylinder with an intake valve (7) and an exhaust valve (8) with fully variable valve gear (9, 10), comprising:

an engine control device (16) for determining setpoint values relating to a fresh gas charge (rlsoll), an internal residual gas charge (rfrgsoll), a torque reduction (etaAVsoll), a residual gas control strategy (AGR-Strat) and a charge strategy (Fü-Art) of the cylinder of the internal combustion engine (1) ;
a transmission device (17, 55, 58, 72) for crank-angle-synchronous transmission of the setpoint values determined by means of the engine control device (16) relating to the fresh gas charge (rlsoll), the charge strategy (Fü-Art), the internal residual gas charge (rfrgsoll), the residual gas control strategy (AGR-Strat) and the torque reduction (etaAVsoll) to a valve control device (20);
the valve control device (20) actuating the fully variable valve gear (9, 10) of the intake valve (7) and exhaust valve (8) of the cylinder of the internal combustion engine (1) on the basis of the setpoint values relating to the fresh gas charge (rlsoll), the internal residual gas charge (rfrgsoll), the torque reduction (etaAVsoll), the residual gas control strategy (AGR-Strat) and the charge strategy (Fü-Art),

**characterized in that** the engine control device (16) determines a first crank-angle-synchronous synchronization pattern on the basis of an output signal from a crank angle sensor (6), the transmission device (17, 55, 58, 72) transmits the setpoint values relating to the fresh gas charge (rlsoll), the internal residual gas charge (rfrgsoll), the torque reduction (etaAVsoll), the residual gas control strategy (AGR-Strat) and the charge strategy (Fü-Art) to the valve control device (20) synchronously with the first crank-angle-synchronous synchronization pattern of the engine control device (16), and the valve control device (20) determines a second crank-angle-synchronous synchronization pattern on the basis of the output signal from the crank angle sensor (6), the second synchronization pattern trailing the first synchronization pattern by a first predetermined angle amount.

**2.** Control arrangement according to Claim 1, **characterized in that** the first crank-angle-synchronous synchronization pattern includes at least a first synchronization instant (Synchro 1), a second synchronization instant (Synchro 2), a third synchronization instant (Synchro 3), a fourth synchronization instant (Synchro 4) and a fifth synchronization instant (Synchro 5), the first synchronization instant (Synchro 1) being a second predetermined angle amount before a top dead centre (TDC) of the cylinder of the internal combustion engine (1), the second synchronization instant (Synchro 2) being a third predetermined angle amount before the first synchronization instant (Synchro 1), the third synchronization instant (Synchro 3) being the third predetermined angle amount before the second synchronization instant (Synchro 2), the fourth synchronization instant (Synchro 4) being the third predetermined angle amount before the third synchronization instant (Synchro 3), and the fifth synchronization instant (Synchro 5) being the third predetermined angle amount before the fourth synchronization instant (Synchro 4), and the transmission device (17, 55, 58, 72) transmitting the setpoint values relating to the internal residual gas charge (rfrgsoll) and the residual gas control strategy (AGR-Strat) at the fifth synchronization instant (Synchro 5) to the valve control device (20) and the setpoint values relating to the fresh gas charge (rlsoll) and the charge strategy (Fü-Art) at the fourth synchronization instant and the setpoint value relating to the torque reduction (etaAVsoll) at the first synchronization instant (Synchro 1).

**3.** Control arrangement according to Claim 2, **characterized in that** the transmission device (17, 55, 58, 72) at the fourth synchronization instant (Synchro 4) transmits updated setpoint values relating to the internal residual gas charge (rfrgsoll) and the residual gas control strategy (AGR-Strat) and transmits updated setpoint values relating to the fresh gas charge (rlsoll) and the charge strategy (Fü-Art) at the third synchronization instant to the valve control device (20).

4.  Control arrangement according to one of Claims 1 to 3, **characterized in that** a fuel determination device (63) for determining a minimum quantity of fuel (rkabmin) sucked out of an induction pipe (13) of the internal combustion engine (1) during a subsequent induction stroke and a maximum quantity of fuel (rkabmax) sucked out of the induction pipe (13) of the internal combustion engine (1) during the subsequent induction stroke is provided in the engine control device (16).

5.  Control arrangement according to Claim 4, **characterized in that** the fuel determination device (63) comprises an injection quantity determination device (64), the injection quantity determination device (64), on the basis of an actuation signal (ti) of an injection valve (12) of the cylinder of the internal combustion engine (1), determining a quantity of fuel (rktineu) which has been injected into the induction pipe (13) of the cylinder since a previous closure of the intake valve (7) and a quantity of fuel (rktimaxm) which is still to be injected until the time at which the injection valve (12) closes.

6.  Control arrangement according to Claim 4 or 5, **characterized in that** the fuel determination device (63) comprises a wall film determination device (66) for determining a wall film (rkwdverb) which remained in the induction pipe (13) of the cylinder after a previous closure of the intake valve (7) and a wall film (rkwderw) which is to be expected after a forthcoming closure of the intake valve (7) of the cylinder.

7.  Control arrangement according to Claim 1, **characterized in that** the first angle amount, in an internal combustion engine (1) with n cylinders, is 720°/2*n.

8.  Control arrangement according to Claim 2, **characterized in that** the third angle amount, in an internal combustion engine (1) with n cylinders, is 720°/n.

9.  Method for controlling operation of an internal combustion engine (1) having a cylinder with an intake valve (7) and an exhaust valve (8) with fully variable valve gear (9, 10), comprising the following steps:

    determining setpoint values relating to a fresh gas charge (rlsoll), an internal residual gas charge (rfrgsoll), a torque reduction (etaAVsoll), a residual gas control strategy (AGR-Strat) and a charge strategy (Fü-Art) of the cylinder of the internal combustion engine (1);
    crank-angle-synchronous transmission of the determined setpoint values relating to the fresh gas charge (rlsoll), the charge strategy (Fü-Art), the internal residual gas charge (rfrgsoll), the residual gas control strategy (AGR-Strat) and the torque reduction (etaAVsoll) from an engine control device (16) to a valve control device (20); and actuating the fully variable valve gear (9, 10) of the intake valve (7) and the exhaust valve (8) of the cylinder of the internal combustion engine (1) on the basis of the setpoint values relating to the fresh gas charge (rlsoll), the internal residual gas charge (rfrgsoll), the torque reduction (etaAVsoll), the residual gas control strategy (AGR-Strat) and the charge strategy (Fü-Art),

    **characterized by** the following steps:

    determining a first crank-angle-synchronous synchronization pattern on the basis of an output signal from a crank angle sensor (6) and operating the engine control device (16) synchronously with the first synchronization pattern;
    transmitting the setpoint values relating to the fresh gas charge (rlsoll), the internal residual gas charge (rfrgsoll), the torque reduction (etaAVsoll), the residual gas control strategy (AGR-Strat) and the charge strategy (Fü-Art) synchronously with the first crank-angle-synchronous synchronization pattern of the engine control device (16) from the engine control device (16) to the valve control device (20);
    determining a second crank-angle-synchronous synchronization pattern, the second synchronization pattern trailing the first synchronization pattern by a first predetermined angle amount, and operating the valve control device (20) synchronously with the second synchronization pattern.

10. Method according to Claim 9, **characterized in that** the first crank-angle-synchronous synchronization pattern includes at least a first synchronization instant (Synchro 1), a second synchronization instant (Synchro 2), a third synchronization instant (Synchro 3), a fourth synchronization instant (Synchro 4) and a fifth synchronization instant (Synchro 5), the first synchronization instant (Synchro 1) being a second predetermined angle amount before a top dead centre (TDC) of a cylinder of the internal combustion engine (1), the second synchronization instant (Synchro 2) being a third predetermined angle amount before the first synchronization instant (Synchro 1), the third synchronization instant (Synchro 3) being the third predetermined angle amount before the second synchronization instant (Synchro 2), the fourth synchronization instant (Synchro 4) being the third predetermined angle amount before the third synchronization instant (Synchro 3), and the fifth synchronization instant (Synchro 5) being the third predetermined angle amount before the fourth synchronization instant (Synchro 4), and the transmission device (17, 55, 58, 72) transmitting the setpoint values relating to the internal residual gas charge (rfrgsoll) and the residual gas control strategy (AGR-Strat) at the fifth synchronization instant (Synchro 5) to the valve control device (20) and the setpoint values relating to the fresh gas charge (rlsoll) and the charge strategy (Fü-Art) at the fourth synchronization instant and the setpoint value relating to the torque reduction (etaAVsoll) at the first synchronization instant (Synchro 1).

11. Method according to Claim 10, **characterized in that** at the fourth synchronization instant (Synchro 4) updated setpoint values relating to the internal residual gas charge (rfrgsoll) and the residual gas control strategy (AGR-Strat) are transmitted to the valve control device (20) and updated setpoint values relating to the fresh gas charge (rlsoll) and the charge strategy (Fü-Art) are transmitted to the valve control device (20) at the third synchronization instant.

12. Method according to one of Claims 9 to 11, **characterized by** the following step:

   determining a minimum quantity of fuel (rkabmin) sucked out of an induction pipe (13) of the internal combustion engine (1) during a subsequent induction stroke and a maximum quantity of fuel (rkabmax) sucked out of the induction pipe (13) of the internal combustion engine (1) during the subsequent induction stroke.

13. Method according to Claim 12, **characterized by** the following step:

   determining a quantity of fuel (rktineu) which has been injected into the induction pipe (13) of the cylinder since a previous closure of the intake valve (7) and a quantity of fuel (rktimaxm) which is still to be injected until the time at which the injection valve (7) closes, on the basis of an actuation signal (ti) of an injection valve (12) of the cylinder of the internal combustion engine (1).

14. Method according to Claim 12 or 13, **characterized by** the following step:

   determining a wall film (rkwdverb) which remained in the induction pipe (13) of the cylinder after a previous closure of the intake valve (7) and a wall film (rkwderw) which is to be expected after a forthcoming closure of the intake valve (7) of the cylinder.

15. Method according to Claim 13, **characterized in that** the first angle amount, in an internal combustion engine (1) with n cylinders, is 720°/2*n.

16. Method according to Claim 10, **characterized in that** the third angle amount, in an internal combustion engine (1) with n cylinders, is 720°/n.

**Revendications**

1. Dispositif de commande pour un moteur à combustion interne (1) avec un cylindre doté d'une soupape d'admission et d'une soupape d'échappement (7, 8) à commande de soupape entièrement variable (9, 10), comprenant :

   un système de commande de moteur (16) pour déterminer des valeurs de consigne concernant un remplissage de gaz frais (rlsoll), un remplissage de gaz résiduels interne (rfrgsoll), une réduction de couple (etaAVsoll), une stratégie de commande de gaz résiduels (AGR-Strat) et une stratégie de remplissage (Fü-Art) du cylindre du moteur à combustion interne (1);
   un système de transmission (17, 55, 58, 72) pour transmettre de manière synchrone avec l'angle vilebrequin les valeurs de consigne déterminées à l'aide du système de commande de moteur (16) concernant le remplissage de gaz frais (rlsoll), la stratégie de remplissage (Fü-Art), le remplissage de gaz résiduels interne (rfrgsoll), la stratégie de commande de gaz résiduels (AGR-Strat) et la réduction de couple (etaVsoll) à un système de commande de soupapes (20);

dans lequel le système de commande de soupapes (20) contrôle la commande de soupape entièrement variable (9, 10) des soupapes d'admission et d'échappement (7, 8) du cylindre du moteur à combustion interne (1) sur la base des valeurs de consigne concernant le remplissage de gaz frais (rlsoll), le remplissage de gaz résiduels interne (rfrgsoll), la réduction de couple (etaAVsoll), la stratégie de commande de gaz résiduels (AGR-Strat) et la stratégie de remplissage (Fü-Art),

**caractérisé en ce que**

le système de commande de moteur (16) détermine sur la base d'un signal de sortie d'un capteur d'angle vilebrequin (6) une première trame de synchronisation synchrone avec l'angle vilebrequin, le système de transmission (17, 55, 58, 72) transmet les valeurs de consigne concernant le remplissage de gaz frais (rlsoll), le remplissage de gaz résiduels interne (rfrgsoll), la réduction de couple (etaAVsoll), la stratégie de commande de gaz résiduels (AGR-Strat) et la stratégie de remplissage (Fü-Art) de manière synchrone avec la première trame de synchronisation synchrone avec l'angle vilebrequin du système de commande de moteur (16) au système de commande de soupapes (20) et le système de commande de soupapes (20) détermine sur la base du signal de sortie du capteur d'angle vilebrequin (6) une deuxième trame de synchronisation synchrone avec l'angle vilebrequin, la deuxième trame de synchronisation retardant sur la première trame de synchronisation d'une première valeur d'angle prédéfinie.

2. Dispositif de commande selon la revendication 1,

**caractérisé en ce que**

la première trame de synchronisation synchrone avec l'angle vilebrequin présente au moins un premier instant de synchronisation (Synchro 1), un deuxième instant de synchronisation (Synchro 2), un troisième instant de synchronisation (Synchro 3), un quatrième instant de synchronisation (Synchro 4) et un cinquième instant de synchronisation (Synchro 5), le premier instant de synchronisation (Synchro 1) étant situé à une deuxième valeur d'angle prédéfinie avant un point mort d'allumage supérieur (ZOT) du cylindre du moteur à combustion interne (1), le deuxième instant de synchronisation (Synchro 2) étant situé à une troisième valeur d'angle prédéfinie avant le premier instant de synchronisation (Synchro 1), le troisième instant de synchronisation (Synchro 3) étant situé à la troisième valeur d'angle prédéfinie avant le deuxième instant de synchronisation (Synchro 2), le quatrième instant de synchronisation (Synchro 4) étant situé à la troisième valeur d'angle prédéfinie avant le troisième instant de synchronisation (Synchro 3) et le cinquième instant de synchronisation (Synchro 5) étant situé à la troisième valeur d'angle prédéfinie avant le quatrième instant de synchronisation (Synchro 4), et le système de transmission (17, 55, 58, 72) transmet les valeurs de consigne concernant le remplissage de gaz résiduels interne (rfrgsoll) et la stratégie de commande de gaz résiduels (AGR-Strat) au système de commande de soupapes (20) au cinquième instant de synchronisation (Synchro 5), les valeurs de consigne concernant le remplissage de gaz frais (rlsoll) et la stratégie de remplissage (Fü-Art) au quatrième instant de synchronisation (Synchro 4), et la valeur de consigne concernant la réduction de couple (etaAVsoll) au premier instant de synchronisation (Synchro 1).

3. Dispositif de commande selon la revendication 2,

**caractérisé en ce que**

le système de transmission ( 17, 55, 58, 72) transmet au quatrième instant de synchronisation (Synchro 4) des valeurs de consigne actualisées concernant le remplissage de gaz résiduels interne (rfrgsoll) et la stratégie de commande de gaz résiduels (AGR-Strat), et transmet des valeurs de consigne actualisées concernant le remplissage de gaz frais (rlsoll) et la stratégie de remplissage (Fü-Art) au système de commande de soupapes (20) au troisième instant de synchronisation.

4. Dispositif de commande selon une des revendications 1 à 3,

**caractérisé en ce que**

le système de commande de moteur (16) comporte un système de détermination de carburant (63) pour déterminer une quantité de carburant minimale aspirée d'un collecteur d'admission (13) du moteur à combustion interne (1) lors d'une aspiration suivante (rkabmin) et une quantité de carburant maximale aspirée du collecteur d'admission (13) du moteur à combustion interne (1) lors de l'aspiration suivante (rkabmax).

5. Dispositif de commande selon la revendication 4,

**caractérisé en ce que**

le système de détermination de carburant (63) comprend un système de détermination de quantité d'injection (64), le système de détermination de quantité d'injection (64) déterminant sur la base d'un signal de commande (ti) d'un injecteur (12) du cylindre du moteur à combustion interne (1) une quantité de carburant injectée dans le collecteur d'aspiration (13) du cylindre depuis une précédente fermeture de la soupape d'admission (7) (rktineu) et une quantité de carburant restant à injecter jusqu'à la fermeture de l'injecteur (12) (rktimaxm).

**6.** Dispositif de commande selon la revendication 4 ou 5,
**caractérisé en ce que**
le système de détermination de carburant (63) comprend un système de détermination de films de paroi (66) pour déterminer un film de paroi restant dans le collecteur d'aspiration (13) du cylindre après une précédente fermeture de la soupape d'admission (7) (rkwdverb) et un film de paroi à prévoir après une fermeture à venir de la soupape d'admission (7) du cylindre (rkwderw).

**7.** Dispositif de commande selon la revendication 1,
**caractérisé en ce que**
la première valeur d'angle est de 720°/2*n pour un moteur à combustion interne (1) à n cylindres.

**8.** Dispositif de commande selon la revendication 2,
**caractérisé en ce que**
la troisième valeur d'angle est de 720°/n pour un moteur à combustion interne (1) à n cylindres.

**9.** Procédé de commande du fonctionnement d'un moteur à combustion interne (1) avec un cylindre doté d'une soupape d'admission et d'une soupape d'échappement (7, 8) à commande de soupape entièrement variable (9, 10), comprenant les étapes suivantes :

détermination de valeurs de consigne concernant un remplissage de gaz frais (rlsoll), un remplissage de gaz résiduels interne (rfrgsoll), une réduction de couple (etaAVsoll), une stratégie de commande de gaz résiduels (AGR-Strat) et une stratégie de remplissage (Fü-Art) du cylindre du moteur à combustion interne (1);
transmission de manière synchrone avec l'angle vilebrequin des valeurs de consigne déterminées concernant le remplissage de gaz frais (rlsoll), la stratégie de remplissage (Fü-Art), le remplissage de gaz résiduels interne (rfrgsoll), la stratégie de commande de gaz résiduels (AGR-Strat) et la réduction de couple (etaAVsoll) à un système de commande de soupapes (20); et
contrôle de la commande de soupape entièrement variable (9, 10) des soupapes d'admission et d'échappement (7, 8) du cylindre du moteur à combustion interne (1) sur la base des valeurs de consigne concernant le remplissage de gaz frais (rlsoll), le remplissage de gaz résiduels interne (rfrgsoll), la réduction de couple (etaAVsoll), la stratégie de commande de gaz résiduels (AGR-Strat) et la stratégie de remplissage (Fü-Art),

**caractérisé par**
les étapes suivantes :

détermination sur la base d'un signal de sortie d'un capteur d'angle vilebrequin (6) d'une première trame de synchronisation synchrone avec l'angle vilebrequin et fonctionnement du système de commande de moteur (16) de manière synchrone avec la première trame de synchronisation;
transmission des valeurs de consigne concernant le remplissage de gaz frais (rlsoll), le remplissage de gaz résiduels interne (rfrgsoll), la réduction de couple (etaAVsoll), la stratégie de commande de gaz résiduels (AGR-Strat) et la stratégie de remplissage (Fü-Art) de manière synchrone avec la première trame de synchronisation synchrone avec l'angle vilebrequin du système de commande de moteur (16), par le système de commande de moteur (16) au système de commande de soupapes (20); et
détermination d'une deuxième trame de synchronisation synchrone avec l'angle vilebrequin, la deuxième trame de synchronisation retardant sur la première trame de synchronisation d'une première valeur d'angle prédéfinie, et fonctionnement du système de commande de soupapes (20) de manière synchrone avec la deuxième trame de synchronisation.

**10.** Procédé selon la revendication 9,
**caractérisé en ce que**
la première trame de synchronisation synchrone avec l'angle vilebrequin présente au moins un premier instant de synchronisation (Synchro 1), un deuxième instant de synchronisation (Synchro 2), un troisième instant de synchronisation (Synchro 3), un quatrième instant de synchronisation (Synchro 4) et un cinquième instant de synchronisation (Synchro 5), le premier instant de synchronisation (Synchro 1) étant situé à une deuxième valeur d'angle prédéfinie avant un point mort d'allumage supérieur (ZOT) du cylindre du moteur à combustion interne (1), le deuxième instant de synchronisation (Synchro 2) étant situé à une troisième valeur d'angle prédéfinie avant le premier instant de synchronisation (Synchro 1), le troisième instant de synchronisation (Synchro 3) étant situé à la troisième valeur d'angle prédéfinie avant le deuxième instant de synchronisation (Synchro 2), le quatrième instant de synchronisation (Synchro 4) étant situé à la troisième valeur d'angle prédéfinie avant le troisième instant de synchronisation (Synchro 3) et le cinquième instant de synchronisation (Synchro 5) étant situé à la troisième valeur d'angle prédéfinie avant le quatrième instant de synchronisation (Synchro 4), et le système de transmission (17, 55, 58, 72) transmettant les valeurs de consigne concernant le remplissage de gaz résiduels interne (rfrgsoll) et la stratégie de commande de gaz résiduels (AGR-Strat) au système de commande de soupapes (20) au cinquième instant de synchronisation (Synchro 5) et les valeurs de consigne concernant le remplissage de gaz frais (rlsoll) et la stratégie de remplissage (Fü-Art) au quatrième instant de synchronisation et la valeur de consigne concernant la réduction de couple (etaAVsoll) au premier instant de synchronisation (Synchro 1).

11. Procédé selon la revendication 10,
    **caractérisé en ce qu'**
    au quatrième instant de synchronisation (Synchro 4), des valeurs de consigne actualisées concernant le remplissage de gaz résiduels interne (rfrgsoll) et la stratégie de commande de gaz résiduels (AGR-Strat) sont transmises au système de commande de soupapes (20), et des valeurs de consigne actualisées concernant le remplissage de gaz frais (rlsoll) et la stratégie de remplissage (Fü-Art) sont transmises au système de commande de soupapes (20) au troisième instant de synchronisation.

12. Procédé selon une des revendications 9 à 11,
    **caractérisé par**
    l'étape suivante :

    détermination d'une quantité de carburant minimale aspirée d'un collecteur d'admission (13) du moteur à combustion interne (1) lors d'une aspiration suivante (rkabmin) et d'une quantité de carburant maximale aspirée du collecteur d'admission (13) du moteur à combustion interne (1) lors de l'aspiration suivante (rkabmax).

13. Procédé selon la revendication 12,
    **caractérisé par**
    l'étape suivante :

    détermination sur la base d'un signal de commande (ti) d'un injecteur (12) du cylindre du moteur à combustion interne (1) d'une quantité de carburant injectée dans le collecteur d'aspiration (13) du cylindre depuis une précédente fermeture de la soupape d'admission (7) (rktineu) et d'une quantité de carburant restant à injecter jusqu'à la fermeture de l'injecteur (12) (rktimaxm).

14. Procédé selon la revendication 12 ou 13,
    **caractérisé par**
    l'étape suivante :

    détermination d'un film de paroi (rkwdverb) restant dans le collecteur d'aspiration (13) du cylindre après une précédente fermeture de la soupape d'admission (7) et d'un film de paroi (rkwderw) à prévoir après une fermeture à venir de la soupape d'admission (7) du cylindre.

15. Procédé selon la revendication 13,
    **caractérisé en ce que**
    la première valeur d'angle est de 720°/2*n pour un moteur à combustion interne (1) à n cylindres.

16. Procédé selon la revendication 10,
    **caractérisé en ce que**
    la troisième valeur d'angle est de 720°/n pour un moteur à combustion interne (1) à n cylindres.

Fig. 1

Fig. 2

Fig. 3

Ventilhals

37  40    41    38  42        43

39

44

45

LOT                    ZOT  α [°KW]

# Fig. 4

## Fig. 5

Zünd-OT davor         Ladungswechsel OT         Zünd-OT

5. Syn.     4. Syn.     3. Syn.     2. Syn.     1. Syn.

180°     180°     180°     180°

72°

0°     108°     288°   360°     468°     648°   720°     $\alpha$ [°KW]

## Fig. 6

misoll ——→

nmot ——→

**Kennfeld für Soll-Füllung**

etalamsoll ——————→

etazwsoll ——————→

rlwunsch

EP 1 370 757 B1